# EUROPEAN PATENT APPLICATION

(11) **EP 4 804 465 A1**
(43) Date of publication of application: **09.09.2026**
(21) Application number: 23957305.8
(22) Date of filing: 02.11.2023
(51) Int. Cl.: H04L 12/14, H04M 15/00, H04W 4/24, H04L 47/24

(54) **COMMUNICATION INDICATION METHODS, FIRST NETWORK ELEMENTS, SECOND NETWORK ELEMENTS, AND CORE NETWORK DEVICES**

(71) Applicant: Beijing Xiaomi Mobile Software Co., Ltd., Beijing 100085 (CN)
(72) Inventor: WU, Jinhua, Beijing 100085 (CN); SHEN, Yang, Beijing 100085 (CN); LI, Lisi, Beijing 100085 (CN)
(74) Representative: Stöckeler, Ferdinand
(86) International application number: PCT/CN2023/129470
(87) International publication number: WO 2025/091437

(57) **Abstract**

The present disclosure relates to communication indication methods, first network elements, second network elements, and core network devices. A method comprises: a first network element sending first information to a second network element, wherein the first information is used for indicating an SDF direction corresponding to QoS handling based on a packet data unit (PDU) set; and the second network element generating at least one PCC rule for the SDF on the basis of the first information. In the present embodiment, the first information is used to indicate the direction corresponding to PDU set handling, thus improving data transmission efficiency.

## Description

### TECHNICAL FIELD

The present disclosure relates to the field of communication technologies, and in particular relates to communication indication methods, a first network element, a second network element, and a core network device.

### BACKGROUND

In the wireless communication, a data transmission is requested to be performed between multiple devices, but the efficiency of the data transmission is currently low.

### SUMMARY

The present disclosure is intended to address the issue of low data transmission efficiency in related technologies.

Embodiments of the present disclosure provide communication indication methods, a first network element, a second network element, and a core network device.

According to embodiments of a first aspect of the present disclosure, a communication indication method is provided, which is performed by a first network element and includes: sending first information to a second network element, where the first information indicates a direction of a service data flow (SDF) corresponding to a Quality of Service (QoS) handling based on a packet data unit (PDU) set, and the first information is used by the second network element to generate at least one policy and charging control (PCC) rule for the SDF.

In these embodiments, it is possible to improve the efficiency of data transmission by indicating the direction corresponding to the handling based on the PDU set via the first information.

According to embodiments of a second aspect of the present disclosure, a communication indication method is provided, which is performed by a second network element and includes: receiving first information sent by a first network element, where the first information indicates a direction corresponding to a handling based on a PDU set; and generating at least one PCC rule for the SDF based on the first information.

According to embodiments of a third aspect of the present disclosure, a communication processing method is provided, which includes: sending, by a first network element, first information to a second network element, where the first information indicates a direction of an SDF corresponding to a QoS handling based on a PDU set; and generating, by the second network element, at least one PCC rule for the SDF based on the first information.

According to embodiments of a fourth aspect of the present disclosure, a first network element is provided, which includes: a transceiver module configured to send first information to a second network element, where the first information indicates a direction of an SDF corresponding to a QoS handling based on a PDU set, and the first information is used by the second network element to generate at least one PCC rule for the SDF.

According to embodiments of a fifth aspect of the present disclosure, a second network element is provided, which includes: a transceiver module configured to receive first information sent by a first network element, where the first information indicates a direction corresponding to a handling based on a PDU set; and a processing module configured to generate at least one PCC rule for the SDF based on the first information.

According to embodiments of a sixth aspect of the present disclosure, a core network device is provided, which includes: a transceiver module configured to send first information to a second network element, the first information indicating a direction corresponding to a handling based on a PDU set, or to receive first information sent by a first network element; and a processing module configured to generate at least one PCC rule for the SDF based on the first information.

According to embodiments of a seventh aspect of the present disclosure, a first network element is provided, which includes one or more processors, where the second network element is configured to perform the communication processing method in any one of the first aspects.

According to embodiments of an eighth aspect of the present disclosure, a second network element is provided, which includes one or more processors, where the second network element is configured to perform the communication processing method in any one of the second aspects.

According to embodiments of a ninth aspect of the present disclosure, a core network device is provided, which includes one or more processors, where the core network device is configured to perform the communication processing method in the third aspect.

According to embodiments of a tenth aspect of the present disclosure, a communication system is provided, which includes a first network element configured to perform the communication processing method in any one of the first aspects, and a second network element configured to perform the communication processing method in any one of the second aspects.

According to embodiments of an eleventh aspect of the present disclosure, a storage medium is provided, which has stored therein instructions that, when run on a communication device, cause the communication device to perform the communication processing method in any one of the first aspect or the second aspect.

### BRIEF DESCRIPTION OF THE DRAWINGS

In order to more clearly illustrate the technical solutions in the embodiments of the present disclosure, the drawings to be used in the embodiments of the present disclosure will be described below. The following drawings are only some embodiments of the present disclosure and do not impose specific limitations on the protection scope of the present disclosure.
FIG. 1A is an illustrative schematic diagram of the architecture of a communication system provided according to an embodiment of the present disclosure.
FIG. 1B is a schematic diagram illustrating the architecture of a communication system according to an embodiment of the present disclosure.
FIG. 2 is an illustrative schematic interactive diagram of a communication indication method provided according to an embodiment of the present disclosure.
FIG. 3A is a schematic flowchart illustrating a communication indication method according to an embodiment of the present disclosure.
FIG. 3B is a schematic flowchart illustrating a communication indication method according to an embodiment of the present disclosure.
FIG. 4A is a schematic flowchart illustrating a communication indication method according to an embodiment of the present disclosure.
FIG. 4B is a schematic flowchart illustrating a communication indication method according to an embodiment of the present disclosure.
FIG. 5A is a schematic interactive diagram illustrating a communication indication method according to an embodiment of the present disclosure.
FIG. 6A is a schematic diagram illustrating a communication indication method according to an embodiment of the present disclosure.
FIG. 6B is a schematic diagram illustrating a communication indication method according to an embodiment of the present disclosure.
FIG. 6C is a schematic diagram illustrating a communication indication method according to an embodiment of the present disclosure.
FIG. 7A is a schematic block diagram of a first network element provided according to an embodiment of the present disclosure.
FIG. 7B is a schematic block diagram of a second network element provided according to an embodiment of the present disclosure.
FIG. 8A is a schematic block diagram of a communication device 8100 provided according to an embodiment of the present disclosure.
FIG. 8B is a schematic block diagram of a chip 8200 provided according to an embodiment of the present disclosure.

### DETAILED DESCRIPTION

Embodiments of the present disclosure provide communication indication methods, a first network element, a second network element, and a core network device.

In a first aspect, embodiments of the present disclosure provide a communication indication method, which is performed by a first network element and includes: sending first information to a second network element, where the first information indicates a direction of an SDF corresponding to a QoS handling based on a PDU set, and the first information is used by the second network element to generate at least one PCC rule for the SDF.

In the above embodiments, by providing the first information to the second network element to generate at least one PCC rule for the SDF so as to support the enhanced processing of the PDU set of uplink or downlink XRM service data flows, end-to-end QoS requirements can be guaranteed more effectively, resource requirements and allocation can be adapted, and the communication efficiency can be improved.

In conjunction with some embodiments of the first aspect, in some embodiments, the first information indicates at least one of: only requesting a downlink PDU set to perform the QoS handling; only requesting an uplink PDU set to perform the QoS handling; requesting a downlink PDU set and an uplink PDU set to perform the QoS handling; requesting a downlink PDU set and an uplink PDU set to perform the QoS handling, and QoS parameters corresponding to the downlink PDU set and the uplink PDU set being identical; requesting a downlink PDU set and an uplink PDU set to perform the QoS handling, and QoS parameters corresponding to the downlink PDU set and the uplink PDU set being different; requesting a downlink PDU set and an uplink PDU set to perform the QoS handling, and QoS parameters corresponding to the downlink PDU set and the uplink PDU set being obtained based on a network configuration; requesting a downlink PDU set and an uplink PDU set to perform the QoS handling, QoS parameters corresponding to the downlink PDU set and the uplink PDU set being different, and QoS parameters corresponding to a downlink PDU and an uplink PDU being identical; or requesting a downlink PDU set and an uplink PDU set to perform the QoS handling, QoS parameters corresponding to the downlink PDU set and the uplink PDU set being different, and QoS parameters corresponding to a downlink PDU and an uplink PDU being different.

In conjunction with some embodiments of the first aspect, in some embodiments, the network configuration includes at least one of: an operator policy, a configuration, a subscription, a terminal-side support capability, a radio access network (RAN) support capability, a session management function (SMF) support capability, a user plane function (UPF) support capability, a policy control function (PCF) support capability, a terminal-side activation capability, an RAN activation capability, an SMF activation capability, a UPF activation capability, or a PCF activation capability.

In conjunction with some embodiments of the first aspect, in some embodiments, the method further includes: sending second information to the second network element, where the second information indicates handling requirements for the PDU set in a relevant direction.

In conjunction with some embodiments of the first aspect, in some embodiments, the second information indicates at least one of: an uplink direction or a downlink direction of QoS parameters for a PDU set being applied to a QoS flow; PDU set specific QoS characteristics; at least one of uplink PDU set specific QoS characteristics or downlink PDU set specific QoS characteristics; an uplink protocol description or a downlink protocol description; or information related to an uplink SDF and a downlink SDF.

In conjunction with some embodiments of the first aspect, in some embodiments, the PDU set specific QoS characteristics include at least one of: a PDU set delay budget, a PDU set error rate, PDU set integrated handling information, or data flow direction information.

In conjunction with some embodiments of the first aspect, in some embodiments, the uplink PDU set specific QoS characteristics include at least one of: an uplink PDU set delay budget, an uplink PDU set error rate, or uplink PDU set integrated handling information.

In conjunction with some embodiments of the first aspect, in some embodiments, the downlink PDU set specific QoS characteristics include at least one of: a downlink PDU set delay budget, a downlink PDU set error rate, or downlink PDU set integrated processing information.

In conjunction with some embodiments of the first aspect, in some embodiments, the information related to the uplink SDF and the downlink SDF includes: a paired identifier (ID) of the uplink SDF and the downlink SDF, and a percentage or threshold of QoS parameters for an uplink PDU set compared with QoS parameters for a downlink PDU set.

In conjunction with some embodiments of the first aspect, in some embodiments, sending the first information and the second information to the second network element includes any one of: sending the first information and the second information to the second network element via a network exposure function (AF) session with a QoS request procedure; sending the first information and the second information to the second network element via an AF session with a QoS request update procedure; sending the first information and the second information to the second network element via a service specific parameter provisioning; sending the first information and the second information to the second network element via an AF session policy setting process; sending the first information and the second information to the second network element via a third network element; sending the first information and the second information to the second network element via a fourth network element; or sending the first information and the second information to the second network element via a third network element and a fourth network element.

In conjunction with some embodiments of the first aspect, in some embodiments, the first network element is an AF network element, the second network element is a PCF network element, the third network element is a network exposure function (NEF) network element, and the fourth network element is a time sensitive communication and time synchronization function (TSCTSF) network element.

In a second aspect, embodiments of the present disclosure provide a communication indication method, which is performed by a second network element and includes: receiving first information sent by a first network element, where the first information indicates a direction of SDF corresponding to a QoS handling based on a PDU set; and generating at least one PCC rule for the SDF based on the first information.

In the above embodiments, by providing the first information to the second network element to generate at least one PCC rule for the SDF so as to support the enhanced processing of the PDU set of uplink or downlink XRM service data flows, end-to-end QoS requirements can be guaranteed more effectively, resource requirements and allocation can be adapted, and the communication efficiency can be improved.

In conjunction with some embodiments of the second aspect, in some embodiments, the first information indicates at least one of: only requesting a downlink PDU set to perform the QoS handling; only requesting an uplink PDU set to perform the QoS handling; requesting a downlink PDU set and an uplink PDU set to perform the QoS handling; requesting a downlink PDU set and an uplink PDU set to perform the QoS handling, and QoS parameters corresponding to the downlink PDU set and the uplink PDU set being identical; requesting a downlink PDU set and an uplink PDU set to perform the QoS handling, and QoS parameters corresponding to the downlink PDU set and the uplink PDU set being different; requesting a downlink PDU set and an uplink PDU set to perform the QoS handling, and QoS parameters corresponding to the downlink PDU set and the uplink PDU set being obtained based on a network configuration; requesting a downlink PDU set and an uplink PDU set to perform the QoS handling, QoS parameters corresponding to the downlink PDU set and the uplink PDU set being different, and QoS parameters corresponding to a downlink PDU and an uplink PDU being identical; or requesting a downlink PDU set and an uplink PDU set to perform the QoS handling, QoS parameters corresponding to the downlink PDU set and the uplink PDU set being different, and QoS parameters corresponding to a downlink PDU and an uplink PDU being different.

In conjunction with some embodiments of the second aspect, in some embodiments, the network configuration includes at least one of: an operator policy, a configuration, a subscription, a terminal-side support capability, an RAN support capability, an SMF support capability, a UPF support capability, a PCF support capability, a terminal-side activation capability, an RAN activation capability, an SMF activation capability, a UPF activation capability, or a PCF activation capability.

In conjunction with some embodiments of the second aspect, in some embodiments, the method further includes: receiving second information sent by the first network element, where the second information indicates handling requirements for the PDU set in a relevant direction.

In conjunction with some embodiments of the second aspect, in some embodiments, the second information indicates at least one of: an uplink direction or a downlink direction of QoS parameters for a PDU set being applied to a QoS flow; PDU set specific QoS characteristics; at least one of uplink PDU set specific QoS characteristics or downlink PDU set specific QoS characteristics; an uplink protocol description or a downlink protocol description; or information related to an uplink SDF and a downlink SDF.

In conjunction with some embodiments of the second aspect, in some embodiments, the PDU set specific QoS characteristics include at least one of: a PDU set delay budget, a PDU set error rate, PDU set integrated handling information, or data flow direction information.

In conjunction with some embodiments of the second aspect, in some embodiments, the uplink PDU set specific QoS characteristics include at least one of: an uplink PDU set delay budget, an uplink PDU set error rate, or uplink PDU set integrated handling information.

In conjunction with some embodiments of the second aspect, in some embodiments, the downlink PDU set specific QoS characteristics include at least one of: a downlink PDU set delay budget, a downlink PDU set error rate, or downlink PDU set integrated processing information.

In conjunction with some embodiments of the second aspect, in some embodiments, the information related to the uplink SDF and the downlink SDF includes: a paired ID of the uplink SDF and the downlink SDF, and a percentage or threshold of QoS parameters for an uplink PDU set compared with QoS parameters for a downlink PDU set. In conjunction with some embodiments of the second aspect, in some embodiments, the PCC rule includes PDU set specific QoS characteristics.

In conjunction with some embodiments of the second aspect, in some embodiments, in a case where data flow direction information indicates that a flow direction is an uplink, the PCC rule is applied to an uplink QoS flow in the SDF; in a case where data flow direction information indicates that a flow direction is a downlink, the PCC rule is applied to a downlink QoS flow in the SDF; and in a case where data flow direction information indicates that a flow direction is a downlink and an uplink, the PCC rule is applied to an uplink QoS flow and a downlink QoS flow in the SDF.

In conjunction with some embodiments of the second aspect, in some embodiments, the PCC rule includes at least one of: uplink PDU set specific QoS characteristics, or downlink PDU set specific QoS characteristics.

In conjunction with some embodiments of the second aspect, in some embodiments, the uplink PDU set specific QoS characteristics are applied to an uplink QoS flow in the SDF, and the downlink PDU set specific QoS characteristics are applied to a downlink QoS flow in the SDF.

In conjunction with some embodiments of the second aspect, in some embodiments, sending the first information and the second information to the second network element includes: sending the first information and the second information to the second network element via an AF session with a QoS request procedure; sending the first information and the second information to the second network element via an AF session with a QoS request update procedure; sending the first information and the second information to the second network element via a service specific parameter provisioning; sending the first information and the second information to the second network element via an AF session policy setting process; sending the first information and the second information to the second network element via a third network element; sending the first information and the second information to the second network element via a fourth network element; or sending the first information and the second information to the second network element via a third network element and a fourth network element.

In conjunction with some embodiments of the second aspect, in some embodiments, the first network element is an AF network element, the second network element is a PCF network element, the third network element is an NEF network element, and the fourth network element is a TSCTSF network element.

In a third aspect, a communication processing method is provided, which includes: sending, by a first network element, first information to a second network element, where the first information indicates a direction of an SDF corresponding to a QoS handling based on a PDU set; and generating, by the second network element, at least one PCC rule for the SDF based on the first information.

In a fourth aspect, a first network element is provided, which includes: a transceiver module configured to send first information to a second network element, where the first information indicates a direction of an SDF corresponding to a QoS handling based on a PDU set, and the first information is used by the second network element to generate at least one PCC rule for the SDF.

In a fifth aspect, a second network element is provided, which includes: a transceiver module configured to receive first information sent by a first network element, where the first information indicates a direction corresponding to a handling based on a PDU set; and a processing module configured to generate at least one PCC rule for the SDF based on the first information.

In a sixth aspect, a core network device is provided, which includes: a transceiver module configured to provide first information to a second network element, where the first information indicates a direction of an SDF corresponding to a QoS handling based on a PDU set; or to receive first information sent by a first network element, where the first information indicates a direction corresponding to a handling based on a PDU set; and a processing module configured to generate at least one PCC rule for the SDF based on the first information.

In a seventh aspect, a first network element is provided, which includes one or more processors, where the second network element is configured to perform the communication processing method in any one of the first aspects.

In an eighth aspect, a second network element is provided, which includes one or more processors, where the second network element is configured to perform the communication processing method in any one of the second aspects.

In a ninth aspect, a core network device is provided, which includes one or more processors, where the core network device is configured to perform the communication processing method in the third aspect.

In a tenth aspect, a communication system is provided, which includes a first network element configured to perform the communication processing method in any one of the first aspects, and a second network element configured to perform the communication processing method in any one of the second aspects.

In an eleventh aspect, a storage medium is provided, which has stored therein instructions that, when run on a communication device, cause the communication device to perform the communication processing method in any one of the first aspect or the second aspect.

In a twelfth aspect, embodiments of the present disclosure provide a first network element, which includes at least one of a transceiver module or a processing module, where the first network element is configured to perform optional implementations of the first and third aspects.

In a thirteenth aspect, embodiments of the present disclosure provide a second network element, which includes at least one of a transceiver module or a processing module; where the second network element is configured to perform optional implementations of the second and third aspects.

In a fourteenth aspect, embodiments of the present disclosure provide a core network device, which includes at least one of a transceiver module or a processing module, where the core network device is configured to perform optional implementations of the first and second aspects.

In a fifteenth aspect, embodiments of the present disclosure provide a first network element, including one or more processors, where the first network element is configured to perform optional implementations of the first and third aspects.

In a sixteenth aspect, embodiments of the present disclosure provide a second network element, including one or more processors, where the second network element is configured to perform optional implementations of the second and third aspects.

In a seventeenth aspect, embodiments of the present disclosure provide a core network device, including one or more processors, where the core network device is configured to perform optional implementations of the first and second aspects.

In an eighteenth aspect, embodiments of the present disclosure provide a communication system, which includes a core network device configured to perform the methods described in optional implementations of the first aspect, the second aspect and the third aspect.

In a nineteenth aspect, embodiments of the present disclosure provide a storage medium, which has stored therein instructions that, when run on a communication device, cause the communication device to perform the methods described in optional implementations of the first aspect, the second aspect and the third aspect.

In a twentieth aspect, embodiments of the present disclosure provide a program product that, when executed by a communication device, causes the communication device to perform the methods described in optional implementations of the first aspect, the second aspect and the third aspect.

In a twenty-first aspect, embodiments of the present disclosure provide a computer program that, when run on a computer, causes the computer to perform the methods described in optional implementations of the first aspect, the second aspect and the third aspect.

In a twenty-second aspect, embodiments of the present disclosure provide a chip or chip system. The chip or chip system includes a processing circuitry configured to perform the methods described in optional implementations of the first aspect, the second aspect and the third aspect.

It may be understood that the first network element, the second network element, the core network device, the communication system, the storage medium, the program product, the computer program, and the chip or chip system which are mentioned above are all configured to execute the methods provided in the embodiments of the present disclosure. Therefore, regarding the beneficial effects they may achieve, reference may be made to the beneficial effects of the corresponding methods, which will not be repeated here.

Embodiments of the present disclosure provide communication indication methods, a first network element, a second network element, and a core network device. In some embodiments, terms such as a communication indication method, an information handling method, and a communication method may be used interchangeably; terms such as a communication indication device, an information handling device, and a communication device may be used interchangeably; and terms such as an information processing system, and a communication system may be used interchangeably.

The embodiments of the present disclosure are not exhaustive, but are merely illustrative of some embodiments, and are not intended to limit the scope of protection of the present disclosure. Unless there is any contradiction, each step in a particular embodiment may be implemented as an independent embodiment, and the steps may be arbitrarily combined. For example, the solution after removing some steps in a particular embodiment may also be implemented as an independent embodiment, and the order of the steps in a particular embodiment may be arbitrarily interchanged. In addition, optional implementations in a particular embodiment may be arbitrarily combined. Furthermore, the embodiments may be arbitrarily combined. For example, some or all steps in different embodiments may be arbitrarily combined, and a particular embodiment may be arbitrarily combined with optional implementations of other embodiments.

In each embodiment of the present disclosure, unless otherwise specified or contradicted by logic, the terms and/or descriptions between the embodiments are consistent and may be referenced by each other. The technical features in different embodiments may be combined based on their inherent logical relationships to form a new embodiment.

The terms used in the embodiments of the present disclosure are only for the purpose of describing specific embodiments and are not intended to limit the present disclosure.

In the embodiments of the present disclosure, unless otherwise specified, elements expressed in the singular form, such as "a," "an," "the," "above," "said," "above-mentioned," "this," or the like, may mean "one and only one," "one or more," "at least one," or the like. For example, when an article such as "a," "an," and "the" in English in translation is used, the noun following the article may be understood as a singular expression or a plural expression.

In the embodiments of the present disclosure, "a plurality of" refers to two or more.

In some embodiments, terms such as "at least one of," "one or more," "a plurality of," "multiple," and the like may be used interchangeably.

In some embodiments, the descriptions such as "at least one of A or B," "A and/or B," "A in one case, B in another case" or "in response to one case A, in response to another case B" may include the following technical solutions depending on the situations: A is executed in some embodiments (A is executed independently from B); B is executed in some embodiments (B is executed independently from A); A or B is selected for execution in some embodiments (A and B are selectively executed); and A and B are executed in some embodiments (A and B are both executed). The same applies when there are more branches such as A, B, and C.

In some embodiments, the descriptions such as "A or B" may include the following technical solutions depending on the situations: A is executed in some embodiments (A is executed independently from B); B is executed in some embodiments (B is executed independently from A); and A or B is selected for execution in some embodiments (A and B are selectively executed). The same applies when there are more branches such as A, B, and C.

The prefixes such as "first" and "second" in the embodiments of the present disclosure are only used to distinguish different described objects and do not constitute any restrictions on the position, order, priority, quantity or content of the described objects. For the statement of the described objects, reference is made to the description in the context of the claims or embodiments, and no unnecessary restrictions should be constituted due to the use of prefixes. For example, if the described object is a "field", the ordinal numbers preceding the "fields" in a "first field" and a "second field" do not limit the position or order of the "fields". "First" and "second" do not limit whether the "fields" they modify are in the same message, nor do they limit the order of the "first field" and "second field". For another example, if the described object is "level", then the ordinal numbers preceding the "levels" in a "first level" and a "second level" do not restrict the priority between "levels". For another example, the number of the described objects is not limited by ordinal numbers and may be one or more. Taking a "first device" as an example, the number of "devices" may be one or more. In addition, the objects modified by different prefixes may be the same or different. For example, if the described object is a "device", then the "first device" and the "second device" may be the same device or different devices, and the types of the "first device" and the "second device" may be the same or different; for another example, if the described object is "information", then "first information" and "second information" may be the same information or different information, and the contents of the "first information" and the "second information" may be the same or different.

In some embodiments, "including A," "comprising A," "indicating A," and "carrying A" may be interpreted as directly carrying A or indirectly indicating A.

In some embodiments, terms such as "in response to...," "in response to determining...," "in the case of...," "at the time of...," "when...," "if...," "in a case where...," and the like may be used interchangeably.

In some embodiments, terms such as "greater than," "greater than or equal to," "not less than," "more than," "more than or equal to," "not smaller than," "higher than," "higher than or equal to," "not lower than," and "above" may be used interchangeably; and terms such as "less than," "less than or equal to," "not greater than," "smaller than," "smaller than or equal to," "not more than," "lower than," "lower than or equal to," "not higher than," and "below" may be used interchangeably.

In some embodiments, apparatuses and devices may be interpreted as being physical or virtual, and their names are not limited to the names described in the embodiments. In some cases, apparatuses and devices may also be understood as "equipments," "devices," "circuits," "network elements," "nodes," "functions," "units," "sections," "systems," "networks," "chips," "chip systems," "entities," and "bodies".

In some embodiments, the "network" may be interpreted as devices included in the network, e.g., an access network device, a core network device, or the like.

In some embodiments, the "access network device (AN device)" may also be referred to as "a radio access network device (RAN device)," "a base station (BS)," "a radio base station," or "a fixed station". In some embodiments, the "access network device (AN device)" may also be understood as "a node," "an access point," "a transmission point (TP)," "a reception point (RP)," "a transmission/reception point (TRP)," "a panel," "an antenna panel," "an antenna array," "a cell," "a macro cell," "a small cell," "a femto cell," "a pico cell," "a sector," "a cell group," "a serving cell," "a carrier," "a component carrier," "a bandwidth part (BWP)", or the like.

In some embodiments, the "terminal" or "terminal device" may be referred to as a user equipment (UE), a user terminal, a mobile station (MS), a mobile terminal (MT), a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or the like.

In some embodiments, obtaining data, information, and the like may comply with the laws and regulations of the country where the data, information, and the like are obtained.

In some embodiments, data, information, and the like may be obtained with the consent of the user.

In addition, each element, each row, or each column in the table in the embodiments of the present disclosure may be implemented as an independent embodiment, and the combination of any elements, any rows, and any columns may also be implemented as an independent embodiment.

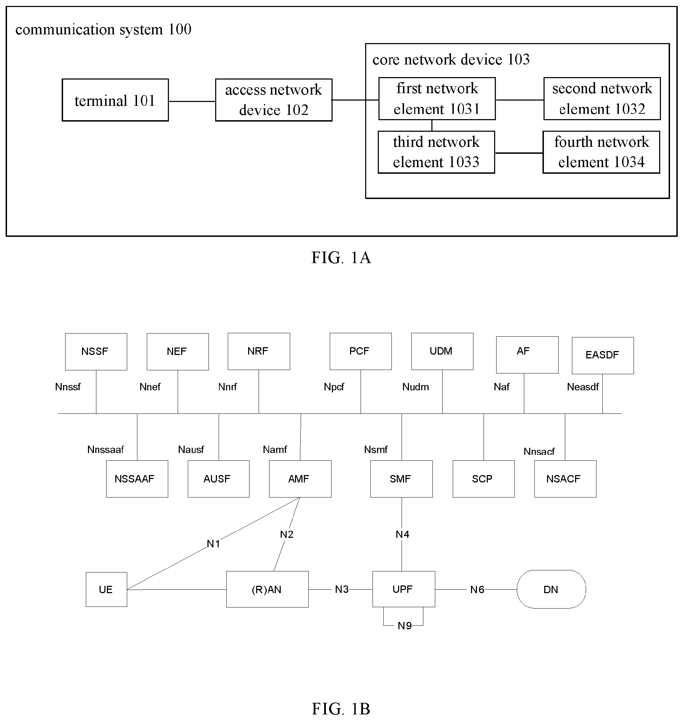

FIG. 1A is a schematic diagram illustrating the architecture of a communication system according to an embodiment of the present disclosure.

As shown in FIG. 1A, the communication system 100 may include a terminal 101 an access network device 102, and a core network device 103.

In some embodiments, for example, the terminal 101 includes, but is not limited to, at least one of: a mobile phone, a wearable device, an Internet of Things device, a car with a communication function, a smart car, a tablet computer (Pad), a computer with a wireless transceiver function, a virtual reality (VR) terminal, an augmented reality (AR) terminal, a wireless terminal in industrial control, a wireless terminal in self-driving, a wireless terminal in a remote medical surgery, a wireless terminal in smart grid, a wireless terminal in transportation safety, a wireless terminal in a smart city, or a wireless terminal in a smart home.

In some embodiments, the access network device 102 is, for example, a node or device that connects the terminal to a wireless network. The network device may include, but is not limited to, at least one of: an evolved Node B (eNB), a next generation eNB (ng-eNB), a next generation Node B (gNB), a node B (NB), a home node B (HNB), a home evolved node B (HeNB), a wireless backhaul device, a radio network controller (RNC), a base station controller (BSC), a base transceiver station (BTS), a base band unit (BBU), or a mobile switching center in a 5G communication system; a base station, an open radio access network (Open RAN), or a cloud RAN (Cloud RAN) in a 6G communication system; base stations in other communication systems; or an access node in a wireless fidelity (Wi-Fi) system.

In some embodiments, the technical solutions in the present disclosure may be applied to the Open RAN architecture. In this case, the interfaces between or within access network devices involved in the embodiments of the present disclosure may be transformed into internal interfaces of the Open RAN architecture. The processes and information interactions between these internal interfaces may be implemented by software or programs.

In some embodiments, the access network device may be composed of a centralized unit (CU) and a distributed unit (DU), in which the CU may also be referred to as a control unit. The CU-DU structure may be used to split the protocol layers of the access network device, and the functions of some protocol layers are placed in the CU for centralized control, and the functions of some or all of the remaining protocol layers are distributed in the DU, and the DU is centrally controlled by the CU.

In some embodiments, the core network device 103 may be a single device, including a first network element 1031, a second network element 1032, and the like; or the core network device 103 may be multiple devices or a group of devices, each including all or some of a first network element 1031, a second network element 1032, and the like. The network elements may be virtual or physical. The core network includes, for example, at least one of an evolved packet core (EPC), a 5G core network (5GCN), or a next generation core (NGC).

In some embodiments, the first network element 1031 is, for example, an application function (AF).

In some embodiments, the first network element 1031 is used for "various services of an application layer", and its name is not limited thereto.

In some embodiments, the second network element 1032 is, for example, a policy control function (PCF).

In some embodiments, the second network element 1032 is used to "control communication policies", and its name is not limited thereto.

In some embodiments, the third network element 1033 is, for example, a network exposure function (NEF).

In some embodiments, the third network element 1033 is used to "manage publicly accessible network data", and its name is not limited thereto.

In some embodiments, the third network element 1033 may be independent of the core network device 103.

In some embodiments, the third network element 1033 may be part of the core network device 103.

In some embodiments, the fourth network element 1034 is, for example, a time sensitive communication and time synchronization function (TSCTSF).

In some embodiments, the fourth network element 1034 is used to "perform time synchronization", and its name is not limited thereto.

In some embodiments, the fourth network element 1034 may be independent of the core network device 103.

In some embodiments, the fourth network element 1034 may be part of the core network device 103.

It may be understood that the communication system described in the embodiments of the present disclosure is for the purpose of more clearly illustrating the technical solution in the embodiments of the present disclosure, but does not constitute a limitation on the technical solution provided in the embodiments of the present disclosure. Those of ordinary skill in the art may know that with the evolution of the system architecture and the emergence of new service scenarios, the technical solution provided in the embodiments of the present disclosure is also applicable to similar technical problems.

The following embodiments of the present disclosure may be applied to the communication system 100 shown in FIG. 1, or to some entities thereof, but are not limited thereto. The entities shown in FIG. 1 are illustrative. The communication system 100 may include all or some of the entities in FIG. 1, or the communication system may include other entities outside in FIG. 1. The number and form of individual entities are arbitrary. The entities may be physical or virtual. The connection relationship between the entities is illustrative. The entities may not be connected to each other, or may be connected to each other in any way. The connection may be direct or indirect, and may be wired or wireless.

The embodiments of the present disclosure may be applied to Long Term Evolution (LTE) systems, LTE-Advanced (LTE-A) systems, LTE-Beyond (LTE-B) systems, SUPER 3G systems, International Mobile Telecommunications-Advanced (IMT-Advanced) systems, 4G mobile communication systems, 5G mobile communication systems, 5G new radio (NR) systems, Future Radio Access (FRA) systems, New-Radio Access Technology (RAT) systems, New Radio (NR) systems, New radio access (NX) systems, Future generation radio access (FX) systems, Global System for Mobile communications (GSM), CDMA2000, Ultra Mobile Broadband (UMB) systems, IEEE 802.11 (Wi-Fi), IEEE 802.16 (WiMAX), IEEE 802.20, Ultra-Wideband (UWB), Bluetooth (a registered trademark), PLMN networks, D2D systems, Machine-to-Machine (M2M) systems, IoT systems, V2X systems, systems utilizing other communication methods, next-generation systems built upon them, and the like. In addition, multiple systems may also be combined (for example, a combination of 5G and LTE or LTE-A, or the like) for application.

FIG. 1B is a schematic diagram illustrating the architecture of a communication system according to an embodiment of the present disclosure. As shown in FIG. 1B, in an embodiment of the present disclosure, the architecture of a 5G system consists of the following network functions (NFs): an authentication server function (AUSF); an access and mobility management function (AMF); data networks (DNs), such as operator services, Internet access, or third-party services; an unstructured data storage network function (UDSF); a network exposure function (NEF); an NF repository function (NRF); a network slice admission control function (NSACF); a network slice specific authentication and authorization function (NSSAAF); a network slice selection function (NSSF); a policy control function (PCF); a session management function (SMF); a unified data management (UDM); a unified data repository (UDR); a user plane function (UPF); a UE radio capability management function (UCMF); an application function (AF); a user equipment (UE); a (radio) access network ((R)AN); a 5G-equipment identity register (5G-EIR); a network data analytics function (NWDAF); a charging function (CHF); a time sensitive networking AF (TSN AF); a time sensitive communication and time synchronization function (TSCTSF); a data collection coordination function (DCCF); an analytical data repository function (ADRF); a messaging framework adaptor function (MFAF); and a non-seamless WLAN offload function (NSWOF).

Optionally, the functions provided by the DCCF and/or the ADRF can also be hosted by the NWDAF.

### Edge Application Server Discovery Function (EASDF).

The architecture of the 5G system also includes the following network entities: a service communication proxy (SCP); a security edge protection proxy (SEPP); a non-3GPP interworking function (N3IWF); a trusted non-3GPP gateway function (TNGF); a wireline access gateway function (W-AGF); and a trusted WLAN interworking function (TWIF).

In an embodiment of the present disclosure, mobile media services, extended reality (XR) services such as cloud virtual reality (VR), augmented reality (AR), and mixed reality (MR) services, cloud gaming, and video-based remote control services for machines or drones are expected to contribute increasingly higher traffic to 5G networks. The XR services involve multimodal data flows. Multimodal data is data input from the same device or different devices (including sensors) for the same service/application, which may be output to one or more destination device terminals. The data flows in the multimodal data often have a certain or even strong correlation, such as the synchronization of audio and video streams, or the synchronization of tactile and visual senses. The data flows of these media services, the relationships between different data flows, and the requirements of these service data flows for the network transmission all have some common characteristics. Effective identification and utilization of these characteristics may be more helpful for the transmission and control of the network and services, as well as for service assurance and user experience.

Extended reality and media (XRM) services and interactive media services require a 5G system (5GS) to comprehensively consider the quality of service (QoS) characteristics of the relevant data flows of services, for example, whether parameters such as delay critical guaranteed bit rate (GBR) data flows, a guaranteed flow bit rate (GFBR), a packet delay budget (PDB), and a maximum default data burst volume (MDBV) can be simultaneously met and coordinated consistently. This involves the assurance for the consistency in QoS authorization and execution between multiple XRM data flows from a single UE and between the XRM data flows from multiple UEs.

In a possible embodiment, the current 5G system supports enhanced capabilities of the AF for processing packet data unit (PDU) sets in XRM service data flows. This supports enhanced QoS sensing and assurance of the AF for XRM service data flows, as well as enhanced quality of experience (QoE) of a user.

In a possible embodiment, the AF enhances the capabilities of processing PDU sets in the XRM service data flows by the following procedures.

The AF provides PDU set specific QoS features and protocol descriptions, including PDU set specific QoS characteristics, specifically including the following: a PDU set delay budget (PSDB), a PDU set error rate (PSER), and a PDU set integrated handling information (PSIHI).

The session management function (SMF) and the user plane function (UPF) can combine the protocol description and protocol header extension provided by the AF to execute the general packet radio service (GPRS) tunneling protocol-U (GTP-U) header extension of the corresponding PDU in the corresponding service data flow (SDF) PDU set, carrying PDU set related information. The PDU set information is used by a next generation radio access network (NG-RAN) for a PDU set based QoS handling. Optionally, the PDU set related information includes a PDU set sequence number; an identifier (ID) of an end PDU of the PDU set; a PDU sequence number within a PDU set; a PDU set size in bytes; and a PDU set importance, which identifies the relative importance of a PDU set compared to other PDU sets within a QoS flow.

The above-mentioned PDU set characteristic enhancements (PDU set specific QoS characteristics and PDU set related information) have greatly improved the QoS guarantee of characteristics of the 5GS for XRM service requirements. However, only enhanced processing of PDU sets of downlink data is supported.

How to support enhanced processing of PDU sets of uplink XRM service data flows, and how to process PDU set handling enhancements that are supported in an uplink and a downlink simultaneously, for example, currently, since uplink and downlink service data flows within the same QoS flow have symmetrical QoS parameter characteristics, while the delay and bandwidth requirements of uplink and downlink XRM services are different, how to support enhanced processing of PDU sets of uplink and downlink XRM service data flows based on actual needs, especially asymmetric needs, and thus more effectively guarantee end-to-end (E2E) QoS requirements, better adapt to resource requirements and allocation, and coordinate E2E QoS resources, remains a problem that needs to be solved in the current 5GS system.

Therefore, how to support enhanced processing of PDU sets of uplink XRM service data flows, and how to support enhanced processing of PDU sets in both an uplink and a downlink simultaneously, especially enhanced processing of PDU sets for uplink and downlink asymmetric QoS requirements, to more effectively guarantee end-to-end QoS requirements and adapt to resource requirements and allocation, are problems that the present disclosure aims to solve.

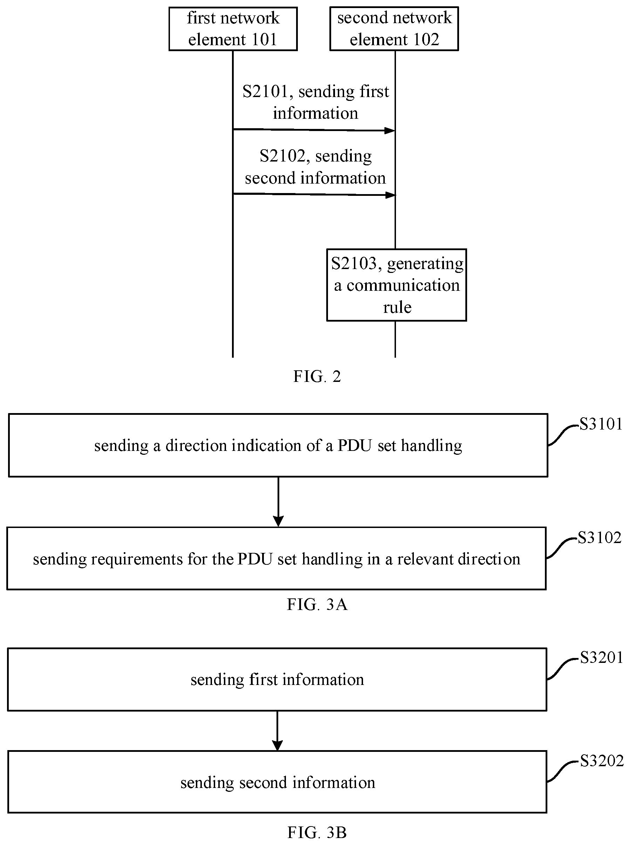

FIG. 2 is a schematic interactive diagram of a communication indication method according to an embodiment of the present disclosure. As shown in FIG. 2, embodiments of the present disclosure relate to a communication indication method, which includes the following steps.

At step S2101, the first network element 101 sends first information to the second network element 102.

In some embodiments, the second network element 102 receives the first information.

In some embodiments, the first information indicates a direction of an SDF corresponding to a QoS handling based on a PDU set. Optionally, the direction includes an uplink or a downlink.

In some embodiments, the first information is used by the second network element to generate at least one PCC rule for the SDF.

In some embodiments, the name of the first information is not limited, and may be, for example, "PDU set handling direction indication" or "indication of a PDU set handling direction".

In some embodiments, the first information indicates that only a downlink PDU set is requested to perform the QoS handling. In other words, application service data flows (such as XR media service data flows and multimodal service data flows) only request to perform a downlink transmission via the downlink PDU set.

In some embodiments, the first information indicates that only an uplink PDU set is requested to perform the QoS handling. In other words, application service data flows (such as XR media service data flows and multimodal service data flows) only request to perform a downlink transmission via the uplink PDU set.

In some embodiments, the first information indicates that a downlink PDU set and an uplink PDU set are requested to perform the QoS handling. In other words, application service data flows (such as XR media service data flows and multimodal service data flows) only request to perform downlink/online transmissions via the uplink PDU set and the uplink PDU set.

In some embodiments, the first information indicates that a downlink PDU set and an uplink PDU set are requested to perform the QoS handling, and QoS parameters corresponding to the downlink PDU set and the uplink PDU set are identical.

In some embodiments, the first information indicates that a downlink PDU set and an uplink PDU set are requested to perform the QoS handling, and QoS parameters corresponding to the downlink PDU set and the uplink PDU set are different.

In some embodiments, the first information indicates that a downlink PDU set and an uplink PDU set are requested to perform the QoS handling, and QoS parameters corresponding to the downlink PDU set and the uplink PDU set are obtained based on a network configuration. Optionally, regardless of whether the QoS parameters for the downlink PDU set and the uplink PDU set are the same, the QoS parameters are obtained based on the network configuration.

In some embodiments, the network configuration includes at least one of: an operator policy, a configuration, a subscription, a terminal-side support capability, an RAN support capability, an SMF support capability, a UPF support capability, a PCF support capability, a terminal-side activation capability, an RAN activation capability, an SMF activation capability, a UPF activation capability, or a PCF activation capability.

In some embodiments, the first information indicates that a downlink PDU set and an uplink PDU set are requested to perform the QoS handling, QoS parameters corresponding to the downlink PDU set and the uplink PDU set are different, and QoS parameters corresponding to a downlink PDU and an uplink PDU are identical.

In some embodiments, the first information indicates that a downlink PDU set and an uplink PDU set are requested to perform the QoS handling, QoS parameters corresponding to the downlink PDU set and the uplink PDU set are different, and QoS parameters corresponding to a downlink PDU and an uplink PDU are different.

In some embodiments, the first network element 101 directly sends the first information to the second network element 102. Optionally, the manners for directly sending the first information include: providing the first information and the second information to the second network element via an AF session with a QoS request procedure; providing the first information and the second information to the second network element via an AF session with a QoS request update procedure; providing the first information and the second information to the second network element via a service specific parameter provisioning; and providing the first information and the second information to the second network element via an AF session policy setting process.

In some embodiments, the first network element 101 indirectly sends the first information to the second network element 102. Optionally, the manners for indirectly sending the first information include: sending the first information and the second information to the second network element via a third network element; sending the first information and the second information to the second network element via a fourth network element; and sending the first information and the second information to the second network element via a third network element and a fourth network element.

In some embodiments, the first network element is an AF network element, the second network element is a PCF network element, the third network element is an NEF network element, and the fourth network element is a TSCTSF network element.

In some embodiments, the first network element 101 sends a session resource request message, and the session resource request message includes first information. Optionally, the second network element 102 receives the above-mentioned session resource request message. The session resource request message is, for example, "Nnef_AFsessionWithQoS_Create request or Nnef_AFsessionWithQoS_Update request", but is not limited thereto.

In some embodiments, the first network element 101 sends an AF session resource request, for example, by creating an AF request via a Nnef_AFsessionWithQoS_Create request.

Optionally, the second network element 102 receives the AF session resource request.

In some embodiments, the AF session resource request includes the first information.

At step S2102, the first network element 101 sends second information to the second network element 102.

In some embodiments, the second network element 102 receives the second information.

In some embodiments, the second information indicates requirements for the PDU set handling in the relevant direction. Optionally, the direction includes an uplink or a downlink.

In some embodiments, the name of the second information is not limited, and may be, for example, "PDU set handling requirement indication".

In some embodiments, the second information indicates whether the uplink or downlink direction of the QoS parameters for the PDU set is applied to the QoS flow. This information indicates the QoS in the corresponding direction.

In some embodiments, being applied to the QoS flow refers to being applied to data packets in the QoS flow. The QoS parameters are applied to all packets in a QoS flow. The second information here is used to determine whether the QoS parameters are applied to uplink or downlink packets.

In some embodiments, the second information indicates PDU set specific QoS characteristics.

In some embodiments, the second information indicates uplink PDU set specific QoS characteristics or downlink PDU set specific QoS characteristics.

In some embodiments, the second information indicates uplink PDU set specific QoS characteristics and downlink PDU set specific QoS characteristics.

In some embodiments, the second information indicates an uplink protocol description or a downlink protocol description.

In some embodiments, the information indicating the flow direction of QoS parameters for the PDU set being applicable to the QoS flow and the information indicating the uplink protocol description or the downlink protocol description are both implementations of independent uplink and downlink QoS. Both pieces of information are each independently bound to the respective QoS flow and are not included in the same QoS flow at the same time.

In some embodiments, if the QoS parameters for different PDU sets in an uplink and a downlink are each associated with the respective flow direction and the respective QoS flow in that flow direction, then the network function can associate these two pairs of QoS flows via group IDs of the uplink and downlink flow directions.

In some embodiments, the second information indicates information related to an uplink SDF and a downlink SDF. Optionally, the information related to the uplink SDF and the downlink SDF includes: a paired ID of the uplink SDF and the downlink SDF; and a percentage or threshold of QoS parameters for an uplink PDU set compared with QoS parameters for a downlink PDU set.

In some embodiments, the percentage of the QoS parameters (such as a delay) for the uplink PDU set compared with the QoS parameters for the downlink PDU set is less than 20%.

In some embodiments, the QoS parameters (such as a delay) for the uplink PDU set are less than or greater than a certain threshold.

In some embodiments, the PDU set specific QoS characteristics include a PDU set delay budget.

In some embodiments, the PDU set specific QoS characteristics include a PDU set error rate.

In some embodiments, the PDU set specific QoS characteristics include PDU set integrated handling information.

In some embodiments, the PDU set specific QoS characteristics include data flow direction information. Optionally, the data flow direction information is an uplink, a downlink, or both an uplink and a downlink.

In some embodiments, the uplink PDU set specific QoS characteristics include an uplink PDU set delay budget.

In some embodiments, the uplink PDU set specific QoS characteristics include an uplink PDU set error rate.

In some embodiments, the uplink PDU set specific QoS characteristics include uplink PDU set integrated handling information.

In some embodiments, the downlink PDU set specific QoS characteristics include a downlink PDU set delay budget.

In some embodiments, the downlink PDU set specific QoS characteristics include a downlink PDU set error rate.

In some embodiments, the downlink PDU set specific QoS characteristics include downlink PDU set integrated handling information.

At step S2103, the second network element 102 generates a communication rule.

In some embodiments, the communication rule is a PCC rule.

In some embodiments, the PCC rule is used to monitor network resources and allocate the network resources reasonably, and effectively control service capabilities of a network, thereby improving the service experience of a user and developing new charging policies.

In some embodiments, the PCC rule contains a combination of a set of related information and a set of related operations. Optionally, the PCC rule contains three main categories of information: service data flow inspection information, policy control information, and charging-related information.

In some embodiments, the second network element 102 generates at least one PCC rule for the SDF based on the first information.

In some embodiments, the second network element 102 generates at least one PCC rule for the SDF based on the second information.

In some embodiments, the second network element 102 generates at least one PCC rule for the SDF based on the first information and the second information.

In some embodiments, the PCC rule includes PDU set specific QoS characteristics. The QoS flow to which the PCC rule is applied is determined by setting QoS characteristic parameters and the flow direction (an uplink, a downlink, or both an uplink and a downlink) corresponding to the QoS characteristic parameters.

In some embodiments, if the data flow direction information indicates that the flow direction is an uplink, then the PCC rule is applied to the uplink QoS flow in the SDF.

In some embodiments, if the data flow direction information indicates that the flow direction is a downlink, then the PCC rule is applied to the downlink QoS flow in the SDF.

In some embodiments, if the data flow direction information indicates that the flow direction is a downlink and a downlink, then the PCC rule is applied to the uplink QoS flow and the downlink QoS flow in the SDF.

In some embodiments, the PCC rule includes at least one of: uplink PDU set specific QoS characteristics or downlink PDU set specific QoS characteristics. By setting the QoS characteristic parameters for the uplink PDU set and the downlink PDU set respectively, the PCC rules for the application to the uplink QoS flow and the PCC rules for the application to the downlink QoS flow can be determined respectively. Optionally, the uplink PDU set specific QoS characteristics and the downlink PDU set specific QoS characteristics can be the same or different.

In some embodiments, the uplink PDU set specific QoS characteristics are applied to the uplink QoS flow in the SDF, and the downlink PDU set specific QoS characteristics are applied to the downlink QoS flow in the SDF.

In some embodiments, the second network element 102 allocates a 5G QoS identifier (5QI) based on the first information. The 5QI is a scalar that points to a 5G QoS feature. This 5G QoS feature corresponds to multiple QoS attributes, and parameters in these QoS attributes are used to control the QoS in the QoS flow forwarding processing.

In some embodiments, the names of information and the like are not limited to the names described in the embodiments. Terms such as "information," "message," "signal," "signaling," "report," "configuration," "indication," "instruction," "command," "channel," "parameter," "domain," "field," "symbol," "code element," "codebook," "codeword," "codepoint," "bit," "data," "program," and "chip" may be used interchangeably.

In some embodiments, terms such as "uplink," "up-link," and "physical uplink" may be used interchangeably; terms such as "downlink," "down-link," and "physical downlink" may be used interchangeably; and terms such as "sidelink," "side-link," "sidelink communication," "side-link communication," "direct connection," "direct link," "direct communication," and "direct link communication" may be used interchangeably.

In some embodiments, terms such as "radio", "wireless", "radio access network (RAN)", "access network (AN)", and "RAN-based" may be used interchangeably.

In some embodiments, "acquiring," "obtaining," "getting," "receiving," "transmitting," "bidirectional transmission," and "sending and/or receiving" may be used interchangeably, and may be interpreted as receiving from other entities, obtaining from protocols, obtaining from higher layers, obtaining by self-processing, autonomously implementing, or other meanings.

In some embodiments, terms such as "sending," "emitting," "reporting," "issuing," "transmitting," "bidirectional transmission," and "sending and/or receiving" may be used interchangeably.

In some embodiments, terms such as "certain," "preset," "predetermined," "set," "indicated," "particular," "any," and "first" may be used interchangeably. "A certain A," "a preset A," "a predetermined A," "a set A," "an indicated A," "a particular A," "any A," and "a first A" may be interpreted as A predefined in a protocol or the like, or as A obtained by setting, configuration, indication or the like, or as a specific A, a certain A, any A, a first A or the like, but are not limited thereto.

The communication method involved in the embodiments of the present disclosure may include at least one of steps S2101 to S2103. For example, step S2101 may be implemented as an independent embodiment, step S2102 may be implemented as an independent embodiment, steps S2101 + S2103 may be implemented as an independent embodiment, and steps S2101 + S2102 + S2103 may be implemented as an independent embodiment, but the communication method is not limited thereto.

In some embodiments, steps S2101 and S2102 may be performed in an alternate order or simultaneously.

In some embodiments, step S2101 is optional, and one or more of these steps may be omitted or substituted in different embodiments.

In some embodiments, step S2102 is optional, and one or more of these steps may be omitted or substituted in different embodiments.

In some embodiments, reference may be made to other optional implementations described before or after the specification corresponding to FIG. 2.

FIG. 3A is a schematic flowchart illustrating a communication indication method according to an embodiment of the present disclosure. As shown in FIG. 3A, embodiments of the present disclosure relate to a communication indication method (first network element side), and the method includes the following steps.

At step S3101, a direction indication of a PDU set handling is sent.

In some embodiments, the second network element 102 receives the direction indication of the PDU set handling.

Regarding the optional implementation of step S3101, reference may be made to the optional implementation of step S2101 in FIG. 2 and other related parts in the embodiments involved in FIG. 2, which will not be repeated here.

In some embodiments, the first network element 101 sends the direction indication of the PDU set handling to the second network element 102, but not limited thereto, and the first network element 101 may also send the direction indication of the PDU set handling to other entities.

At step S3102, requirements for the PDU set handling in a relevant direction are sent.

In some embodiments, the second network element 102 receives the requirements for the PDU set handling in the relevant direction.

Regarding the optional implementation of step S3102, reference may be made to the optional implementation of step S2102 in FIG. 2 and other related parts in the embodiments involved in FIG. 2, which will not be repeated here.

In some embodiments, the first network element 101 sends the requirements for the PDU set handling in the relevant direction to the second network element 102, but not limited thereto, and the first network element 101 may also send the requirements for the PDU set handling in the relevant direction to other entities.

The communication method involved in the embodiments of the present disclosure may include at least one of steps S3101 to S3102. For example, step S3101 may be implemented as an independent embodiment, step S3102 may be implemented as an independent embodiment, and steps S3101 + S3102 may be implemented as an independent embodiment, but the communication method is not limited thereto.

In some embodiments, steps S3101 and S3102 may be performed in an alternate order or simultaneously.

In some embodiments, step S3101 is optional, and one or more of these steps may be omitted or substituted in different embodiments.

In some embodiments, step S3102 is optional, and one or more of these steps may be omitted or substituted in different embodiments.

FIG. 3B is a schematic flowchart illustrating a communication indication method according to an embodiment of the present disclosure. As shown in FIG. 3B, embodiments of the present disclosure relate to a communication indication method, and the method includes the following steps.

At step S3201, first information is sent.

Regarding the optional implementation of step S3201, reference may be made to the optional implementation of step S2101 in FIG. 2, the optional implementation of step S3101 in FIG. 3A, and other related parts in the embodiments involved in FIG. 2 and FIG. 3A, which will not be repeated here.

At step S3202, second information is sent.

Regarding the optional implementation of step S3202, reference may be made to the optional implementation of step S2102 in FIG. 2, the optional implementation of step S3102 in FIG. 3A, and other related parts in the embodiments involved in FIG. 2 and FIG. 3A, which will not be repeated here.

The communication method involved in the embodiments of the present disclosure may include at least one of steps S3201 to S3202. For example, step S3201 may be implemented as an independent embodiment, step S3202 may be implemented as an independent embodiment, and steps S3201 + S3202 may be implemented as an independent embodiment, but the communication method is not limited thereto.

In some embodiments, steps S3201 and S3202 may be performed in an alternate order or simultaneously.

In some embodiments, step S3201 is optional, and one or more of these steps may be omitted or substituted in different embodiments.

In some embodiments, step S3202 is optional, and one or more of these steps may be omitted or substituted in different embodiments.

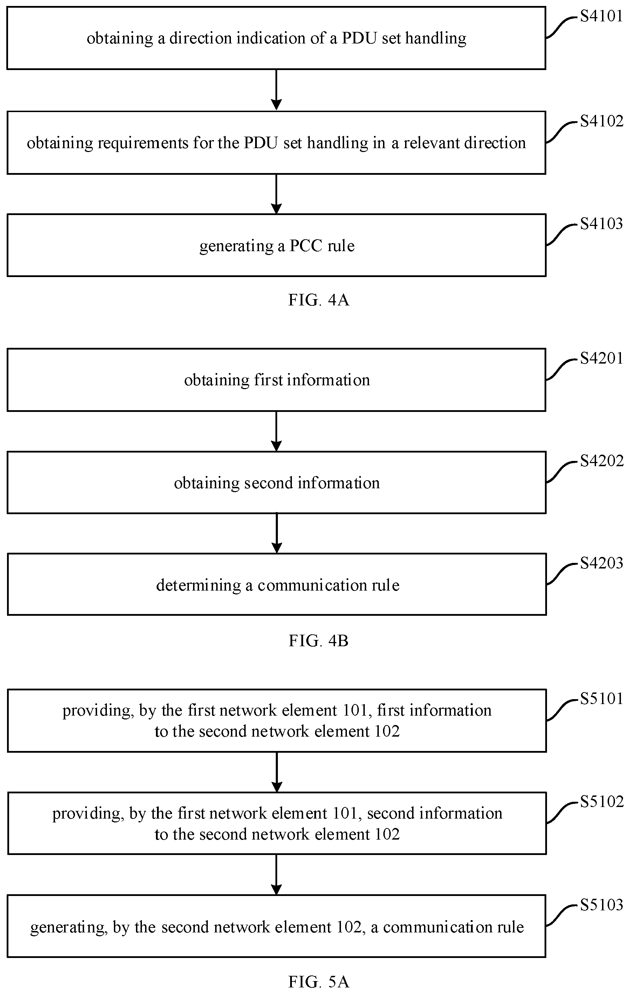

FIG. 4A is a schematic flowchart illustrating a communication indication method according to an embodiment of the present disclosure. As shown in FIG. 4A, embodiments of the present disclosure relate to a communication indication method (second network element side), and the method includes the following steps.

At step S4101, a direction indication of a PDU set handling is obtained.

Regarding the optional implementation of step S4101, reference may be made to the optional implementation of step S2101 in FIG. 2 and other related parts in the embodiments involved in FIG. 2, which will not be repeated here.

At step S4102, requirements for the PDU set handling in a relevant direction are obtained.

Regarding the optional implementation of step S4102, reference may be made to the optional implementation of step S2102 in FIG. 2 and other related parts in the embodiments involved in FIG. 2, which will not be repeated here.

At step S4103, a PCC rule is generated.

Regarding the optional implementation of step S4103, reference may be made to the optional implementation of step S2103 in FIG. 2 and other related parts in the embodiments involved in FIG. 2, which will not be repeated here.

In some embodiments, the second network element 102 generates the PCC rule based on the first information.

In some embodiments, the second network element 102 generates the PCC rule based on the second information.

In some embodiments, the second network element 102 generates the PCC rule based on the first information and the second information.

The communication method involved in the embodiments of the present disclosure may include at least one of steps S4101 to S4103. For example, step S4101 may be implemented as an independent embodiment, step S4102 may be implemented as an independent embodiment, and steps S4101 + S4102 may be implemented as an independent embodiment, but the communication method is not limited thereto.

In some embodiments, steps S4101 and S4102 may be performed in an alternate order or simultaneously.

In some embodiments, step S4101 is optional, and one or more of these steps may be omitted or substituted in different embodiments.

In some embodiments, step S4102 is optional, and one or more of these steps may be omitted or substituted in different embodiments.

FIG. 4B is a schematic flowchart illustrating a communication indication method according to an embodiment of the present disclosure. As shown in FIG. 4B, embodiments of the present disclosure relate to a communication indication method (second network element side), and the method includes the following steps.

At step S4201, first information is obtained.

Regarding the optional implementation of step S4201, reference may be made to the optional implementation of step S2101 in FIG. 2, the optional implementation of step S4101 in FIG. 4A, and other related parts in the embodiments involved in FIG. 2 and FIG. 4A, which will not be repeated here.

At step S4202, second information is obtained.

Regarding the optional implementation of step S4202, reference may be made to the optional implementation of step S2102 in FIG. 2, the optional implementation of step S4102 in FIG. 4A, and other related parts in the embodiments involved in FIG. 2 and FIG. 4A, which will not be repeated here.

At step S4203, a communication rule is determined.

Regarding the optional implementation of step S4203, reference may be made to the optional implementation of step S2103 in FIG. 2, the optional implementation of step S4103 in FIG. 4A, and other related parts in the embodiments involved in FIG. 2 and FIG. 4A, which will not be repeated here.

The communication method involved in the embodiments of the present disclosure may include at least one of steps S4201 to S4203. For example, step S4201 may be implemented as an independent embodiment, step S4202 may be implemented as an independent embodiment, and steps S4201 + S4202 may be implemented as an independent embodiment, but the communication method is not limited thereto.

In some embodiments, steps S4201 and S4202 may be performed in an alternate order or simultaneously.

In some embodiments, step S4201 is optional, and one or more of these steps may be omitted or substituted in different embodiments.

In some embodiments, step S4202 is optional, and one or more of these steps may be omitted or substituted in different embodiments.

FIG. 5A is a schematic interactive diagram illustrating a communication indication method according to an embodiment of the present disclosure. As shown in FIG. 5A, embodiments of the present disclosure relate to a communication indication method, and the method includes the following steps.

At step S5101, the first network element 101 provides first information to the second network element 102.

Regarding the optional implementation of step S5101, reference may be made to the optional implementation of step S2101 in FIG. 2, the optional implementation of step S3101 in FIG. 3, the optional implementation of step S4101 in FIG. 4, and other related parts in the embodiments involved in FIG. 2, FIG. 3 and FIG. 4, which will not be repeated here.

At step S5102, the first network element 101 provides second information to the second network element 102.

Regarding the optional implementation of step S5102, reference may be made to the optional implementation of step S2102 in FIG. 2, the optional implementation of step S3102 in FIG. 3, the optional implementation of step S4102 in FIG. 4, and other related parts in the embodiments involved in FIG. 2, FIG. 3 and FIG. 4, which will not be repeated here.

At step S5103, the second network element 102 generates a communication rule.

Regarding the optional implementation of step S5104, reference may be made to the optional implementation of step S2103 in FIG. 2, the optional implementation of step S4103 in FIG. 4, the optional implementation of step S4203 in FIG. 4, and other related parts in the embodiments involved in FIG. 2 and FIG. 4, which will not be repeated here.

In some embodiments, the above methods may include the methods in the above embodiments of the communication system side, the terminal side, the access network device side, the core network device side, the first network element side, the second network element side, and the like, which will not be repeated here.

The communication method involved in the embodiments of the present disclosure may include at least one of steps S5201 to S5203. For example, step S5201 may be implemented as an independent embodiment, step S5202 may be implemented as an independent embodiment, and steps S5201 + S5202 may be implemented as an independent embodiment, but the communication method is not limited thereto.

In some embodiments, steps S5201 and S5202 may be performed in an alternate order or simultaneously.

In some embodiments, step S5201 is optional, and one or more of these steps may be omitted or substituted in different embodiments.

In some embodiments, step S5202 is optional, and one or more of these steps may be omitted or substituted in different embodiments.

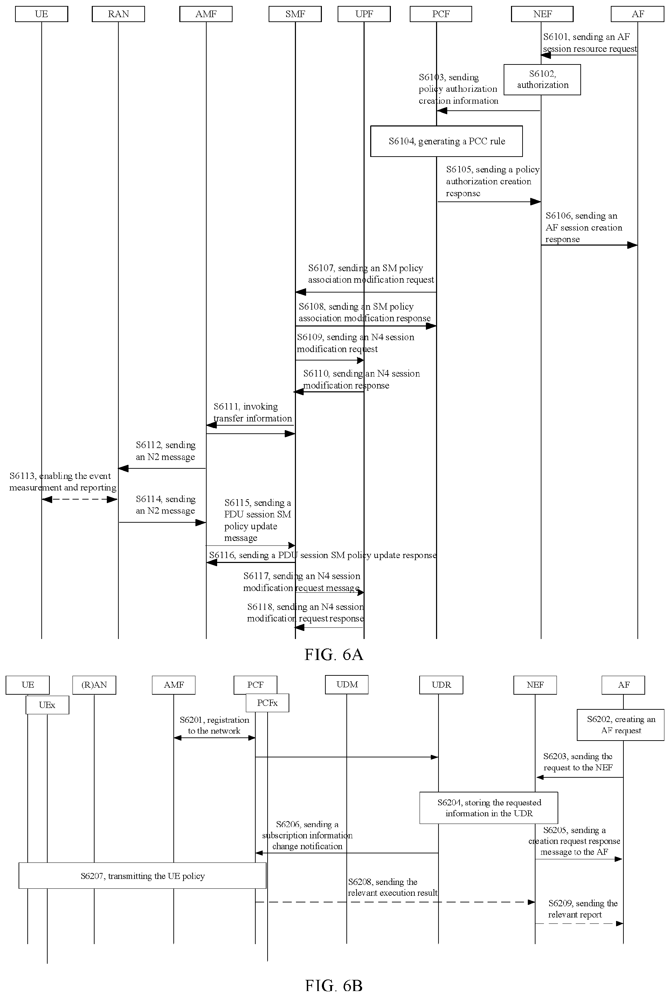

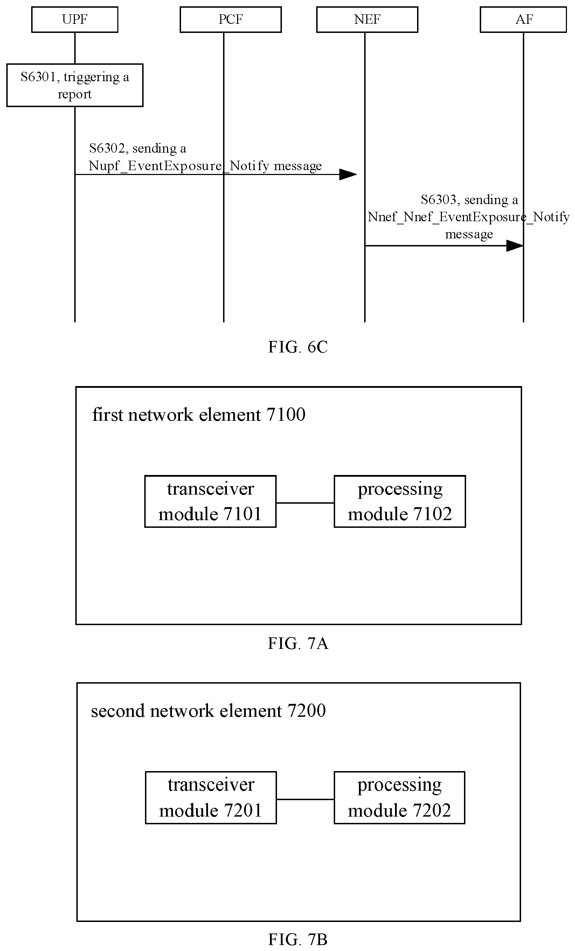

FIG. 6A is a schematic diagram illustrating a communication indication method according to an embodiment of the present disclosure. As shown in FIG. 6, embodiments of the present disclosure relate to a communication indication method, and the method includes the following steps.

At step S6101, an AF sends an AF session resource request. Optionally, the AF sends a Nnef_AFsessionWithQoS_Create request to an NEF to create an AF request.

Optionally, the AF session resource request may include at least one of: a direction indication of a PDU set handling, or requirements for a PDU set handling in a relevant direction.

In some embodiments, the direction indication of the PDU set handling indicates at least one of: only requesting a downlink PDU set to perform the QoS handling; only requesting an uplink PDU set to perform the QoS handling; requesting a downlink PDU set and an uplink PDU set to perform the QoS handling; requesting a downlink PDU set and an uplink PDU set to perform the QoS handling, and QoS parameters corresponding to the downlink PDU set and the uplink PDU set being identical; requesting a downlink PDU set and an uplink PDU set to perform the QoS handling, and QoS parameters corresponding to the downlink PDU set and the uplink PDU set being different; requesting a downlink PDU set and an uplink PDU set to perform the QoS handling, and QoS parameters corresponding to the downlink PDU set and the uplink PDU set being obtained based on a network configuration; requesting a downlink PDU set and an uplink PDU set to perform the QoS handling, QoS parameters corresponding to the downlink PDU set and the uplink PDU set being different, and QoS parameters corresponding to a downlink PDU and an uplink PDU being identical; or requesting a downlink PDU set and an uplink PDU set to perform the QoS handling, QoS parameters corresponding to the downlink PDU set and the uplink PDU set being different, and QoS parameters corresponding to a downlink PDU and an uplink PDU being different.

Optionally, the network configuration includes at least one of: an operator policy, a configuration, a subscription, a terminal-side support capability, an RAN support capability, an SMF support capability, a UPF support capability, a PCF support capability, a terminal-side activation capability, an RAN activation capability, an SMF activation capability, a UPF activation capability, or a PCF activation capability.

In some embodiments, the requirements for the PDU set handling in the relevant direction indicate at least one of: the flow direction of QoS parameters for the PDU set being applicable to the QoS flow; PDU set specific QoS characteristics; uplink PDU set specific QoS characteristics or downlink PDU set specific QoS characteristics; uplink PDU set specific QoS characteristics and downlink PDU set specific QoS characteristics; an uplink protocol description or a downlink protocol description; or information related to an uplink SDF and a downlink SDF.

In some embodiments, the PDU set specific QoS characteristics include at least one of: a PDU set delay budget, a PDU set error rate, PDU set integrated handling information, or data flow direction information.

In some embodiments, the uplink PDU set specific QoS characteristics include at least one of: an uplink PDU set delay budget, an uplink PDU set error rate, or uplink PDU set integrated handling information.

In some embodiments, the downlink PDU set specific QoS characteristics include at least one of: a downlink PDU set delay budget, a downlink PDU set error rate, or downlink PDU set integrated processing information.

In some embodiments, the information related to the uplink SDF and the downlink SDF includes: a paired ID of the uplink SDF and the downlink SDF, and a percentage or threshold of QoS parameters for an uplink PDU set compared with QoS parameters for a downlink PDU set.

Optionally, the AF session resource request carries XRM service information, common ID information to identify the XRM service data flow group, an UE address/UE identifier, an AF identifier, an application ID, flow description(s), a data network name (DNN), network slice selection assistance information (S-NSSAI), QoS parameters, and other relevant information. The common ID here can be used to identify all data flows in the XRM service group.

In some embodiments, the direction indication of the PDU set handling is the first information mentioned above, and the requirements for the PDU set handling in the relevant direction are the second information mentioned above.

In some embodiments, the AF network element is used as the first network element 101, the PCF network element is used as the second network element 102, the NEF network element is used as the third network element 103, and the TSCTSF network element is used as the fourth network element 104.

At step S6102, the NEF authorizes the AF session resource request.

In some embodiments, if the AF is an untrusted AF, the request from the AF is sent to the PCF via the NEF. Optionally, the NEF performs relevant mappings, including the mapping from the XRM service identifier (AF service index) to the DNN and the S-NSSAI, the mapping from an external application to a core network (CN) application identifier; and the mapping from an external UE identifier to a UE identifier in the CN based on UDM subscription information (such as a subscriber permanent identifier, SUPI), and the mapping from external to internal XRM service group identifiers based on UDM subscription information.

At step S6103, the NEF sends policy authorization creation information to the PCF.

In some embodiments, the policy authorization creation information (Npct PolicyAuthorization Create request) carries the direction indication of the PDU set handling, as well as the requirements for the PDU set handling in the relevant direction, which are used by the PCF to make communication policy decisions. Optionally, the policy authorization creation information may carry information related to the XRM service in the AF request.

Optionally, after authorizing the AF session resource request, the NEF determines whether to invoke the TSCTSF or directly contact the PCF based on parameters provided by the AF. This is used to set up an AF session with the required QoS procedure.

Optionally, the PCF receives attributes provided by the AF from the NEF or the TSCTSF.

At step S6104, the PCF generates a PCC rule.

In some embodiments, the PCF generates one or more PCC rules for the corresponding service data flow based on the direction indication of the PDU set handling carried in the policy authorization creation information and the requirements for the PDU set handling in the relevant direction. Optionally, the 5QI is allocated based on the direction indication of the PDU set handling.

In some embodiments, the requirements for the PDU set handling in the relevant direction in the corresponding QoS flow direction rule indicate at least one of: the flow direction of QoS parameters for the PDU set being applicable to the QoS flow; PDU set specific QoS characteristics; uplink PDU set specific QoS characteristics or downlink PDU set specific QoS characteristics; uplink PDU set specific QoS characteristics and downlink PDU set specific QoS characteristics; an uplink protocol description or a downlink protocol description; or information related to an uplink SDF and a downlink SDF.

In some embodiments, the PDU set specific QoS characteristics include at least one of: a PDU set delay budget, a PDU set error rate, PDU set integrated handling information, or data flow direction information.

In some embodiments, the uplink PDU set specific QoS characteristics include at least one of: an uplink PDU set delay budget, an uplink PDU set error rate, or uplink PDU set integrated handling information.

In some embodiments, the downlink PDU set specific QoS characteristics include at least one of: a downlink PDU set delay budget, a downlink PDU set error rate, or downlink PDU set integrated processing information.

In some embodiments, the information related to the uplink SDF and the downlink SDF includes: a paired ID of the uplink SDF and the downlink SDF, and a percentage or threshold of QoS parameters for an uplink PDU set compared with QoS parameters for a downlink PDU set.

At step S6105, the PCF sends a policy authorization creation response (Npcf_PolicyAuthorization_Createresponse) to the NEF.

At step S6106, the NEF sends an AF session creation response (Nnef_AFsessionWithQoS_Createresponse) to the AF.

At step S6107, the PCF sends a session management (SM) policy association modification request to the SMF.

In some embodiments, the SM policy association modification request includes the PCC rule (such as a QoS monitoring policy).

In some embodiments, the SMF generates a QoS monitoring configuration for the UPF (and RAN) based on the QoS monitoring policy for measurements from the PCF.

At step S6108, the SMF sends an SM policy association modification response to the PCF.

At step S6109, the SMF sends an N4 session modification request to the UPF.

In some embodiments, the N4 session modification request includes the QoS monitoring configuration.

At step S6110, the UPF sends an N4 session modification response to the SMF.

In some embodiments, the UPF enables measurement and reporting based on the QoS monitoring configuration in the N4 session modification request.

At step S6111, for the SMF requested modification, the SMF invokes transfer information (Namf_Communication_N1N2MessageTransfer).

In some embodiments, the transfer information includes N2 SM information, such as a PDU session ID, a QoS flow identity (QFI), a QoS profile, a QoS monitoring configuration; and an N1 SM container.

At step S6112, the AMF sends an N2 message to the RAN.

In some embodiments, the N2 message includes N2 SM information received from the SMF; and an NAS message, such as a PDU session ID, and an N1 SM container (PDU session modification command).

At step S6113, the RAN enables the event measurement and reporting.

In some embodiments, upon receiving the QoS monitoring configuration, the RAN enables the event measurement and reporting, e.g., the RAN detects an uplink delay and a downlink delay, and uses the sum of the uplink PDB and the downlink PDB as a round-trip (RT) latency.

At step S6114, the RAN sends an N2 message to the AMF.

In some embodiments, the RAN acknowledges the N2 PDU session request by sending an N2 PDU session acknowledge (Ack) message to the AMF.

At step S6115, the AMF sends a PDU session SM policy update message (Nsmf_PDUSession_UpdateSMContext) to the SMF.

In some embodiments, the PDU session SM policy update message includes N2 SM information received from the AMF.

At step S6116, the SMF sends a PDU session SM policy update response (Nsmf_PDUSession_UpdateSMContext response) to the AMF.

At step S6117, the SMF sends an N4 session modification request message (N4SessionModificationRequest) to the UPF.

In some embodiments, the N4 session modification request message is used to update the N4 session of the UPF that is involved by the PDU session modification.

At step S6118, the UPF sends an N4 session modification request response (N4SessionModificationResponse) to the SMF.

The communication method involved in the embodiments of the present disclosure may include at least one of steps S6101 to S6118. For example, step S6101 may be implemented as an independent embodiment, step S6102 may be implemented as an independent embodiment, steps S6101 + S6103 may be implemented as an independent embodiment, and steps S6101 + S6102 + S6103 may be implemented as an independent embodiment, but the communication method is not limited thereto.

In some embodiments, steps S6101 and S6103 may be performed in an alternate order or simultaneously.

In some embodiments, steps S6105 to S6114 are optional, and one or more of these steps may be omitted or substituted in different embodiments.

In the embodiments of the present disclosure, some or all of the steps and their optional implementations may be arbitrarily combined with some or all of the steps in other embodiments, or may be arbitrarily combined with the optional implementations in other embodiments.

FIG. 6B is a schematic diagram illustrating a communication indication method according to an embodiment of the present disclosure. As shown in FIG. 6B, embodiments of the present disclosure relate to a communication indication method, and the method includes the following steps.

At step S6201, a UE is registered to the network, and the UE selects a PCF to complete a session policy association. The UE refers to some or all of UEs related to an XRM service or a multimodal data service. The PCF subscribes to the UDM for change notifications of subscription information related to the XRM service or the multimodal data service based on the XRM service policy and QoS requirements.

At step S6202, the AF creates an AF request, and the AF request includes information such as an XRM service identifier, a common ID, and a UE address or identifier.

Optionally, the AF may carry first information and second information in the request message.

Optionally, the AF provides XRM service parameters or multimodal data service parameters to one or more UEs related to the service via a Nnef_XRMServiceParameter service. The information sent by the AF includes a service description (common ID), service parameters, a UE/UE group, and a subscription.

Specifically, the following applies.
1) Service description (common ID) is used to identify an XRM service or an XRM data service; and can be identified by a combination of a DNN and S-NSSAI, or by an XRM ID; or represented by an AF service ID or an external application ID.
2) Service parameters: information on the AF guidance for XRM service or multimodal data service related policy and QoS determination. For example, the service parameters are the first information of the media data flow related to the XRM service and the corresponding second information, a list of rules that associate the XRM service or multiple data service application traffic, a UE policy and other parameters, a paired ID of downlink and uplink SDFs/a common ID or group ID, or the combination of a DNN and S-NSSAI, a session and service continuity (SSC) mode, and the selection priority of the corresponding rules (e.g., the priority of an alternative QoS parameter, the priority of the corresponding location or time window, the priority of the corresponding accounting type or routing selection, and the like).
3) The AF requests a single UE or multiple UEs related to the associated XRM service or multimodal data service.
4) Subscription. The AF may subscribe to notifications about the outcome of the SM policy or to the execution and changes of the AM or UE policy; or to QoS monitoring events related to media data flows related to the XRM service.

When the AF needs to update or delete the corresponding request or subscription, the update and deletion procedure of the AF request can also be initiated via this service.

At step S6203, the AF sends the request to the NEF. The NEF authorizes the AF request. The NEF performs relevant mappings, including the mapping from the XRM service identifier or the multimodal data service identifier to the DNN and the S-NSSAI, the mapping from an external application to a CN application identifier; and the mapping from an external UE identifier to a UE identifier in the CN based on UDM subscription information (such as an SUPI), and the mapping from external to internal XRM service group identifiers based on UDM subscription information.

At step S6204, the NEF stores the requested information in the UDR, for example, storing the requested information as service characteristic parameter information of application data. Optionally, the NEF may improve the corresponding service parameters based on a local configuration.

Optionally, based on the operator policy and in combination of subscription information, the NEF can determine whether to request authorized service characteristics for the XRM service or the multimodal data service of a single UE or multiple UEs, and store the corresponding parameters in the UDR.

If multiple UEs are involved, the NEF transmits relevant service parameters to the PCF, and performs corresponding authorizations and makes or updates policies and rules in each PCF. Based on the authorization request result, the PCF stores the corresponding information in the UDR.

In multi-UE scenarios, the subscription data from UE group members are associated via an XRM service ID or a group ID/common ID, and the data from UEs in the UE group is kept consistent (e.g., service QoS, and access and data routing characteristic parameters).

Receivers such as the AF or PCF can subscribe to an XRM service or multimodal data related event trigger via the NEF, such as QoS monitoring reports, QoS service updates, UE migration, PCF modifications, or the like.

Receivers such as the AF or PCF receive NEF reports and obtain corresponding notifications; and execute subsequent updates to application requirements or QoS rules.

At step S6205, the NEF returns a creation request response message to the AF.

If, at step S6201, the PCF executes a subscription information update notification after the UE is registered, then the subsequent procedure is performed because the AF requests an update to the UDR subscription information.

At step S6206, the PCF receives a subscription information change notification from the UDR.

At step S6207, the PCF transmits the UE policy to the UE.

At step S6208, if the AF subscribes to a notification regarding the execution of the XRM service related policy, the PCF sends the relevant execution result to the AF via the NEF. Meanwhile, if there are any changes to the relevant subscription parameters, the PCF updates the changes to the UDR, triggering changes and coordination of the service PCF execution policies of other UEs related to the XRM service group.

At step S6209, after receiving the notification, the NEF first performs the mapping of relevant internal and external parameters, and then sends the relevant report to the AF.

FIG. 6C is a schematic diagram illustrating a communication indication method according to an embodiment of the present disclosure. As shown in FIG. 6C, embodiments of the present disclosure relate to a communication indication method, and the method includes the following steps.

At step S6301, when an event is detected, a report is triggered, e.g., a threshold is reached, or a period timer is overtime. Optionally, a UPF triggers a Nupf_EventExposure_Notify message to report measured information.

At step S6302, the UPF sends the Nupf_EventExposure_Notify message to an NEF, where the Nupf_EventExposure_Notify message includes measured PDU set related QoS status information.

At step S6303, the NEF sends a Nnef_Nnef_EventExposure_Notify message to an AF, where the Nnef_Nnef_EventExposure_Notify message includes measured PDU set related QoS status information.

The embodiments of the present disclosure further provide a device for implementing any one of the above methods. For example, a device is provided, which includes units or modules for implementing steps performed by the terminal in any one of the above methods. For another example, another device is provided, which includes units or modules for implementing steps performed by a network device (such as an access network device, a core network functional node, a core network device, or the like) in any one of the above methods.

It should be understood that the division of the units or modules in the above device is only a logical functional division. In actual implementation, the units or modules may be fully or partially integrated into a physical entity, or may be physically separated. Furthermore, the units or modules in the device may be implemented in the form of calling software by a processor, for example, the device includes a processor, the processor is connected to a memory, the memory has stored therein instructions, and the processor calls the instructions stored in the memory to implement any one of the above methods or to implement the functions of the units or modules of the above device. The processor is, for example, a general-purpose processor, such as a central processing unit (CPU) or a microprocessor, and the memory is either internal to the device or external to the device. Alternatively, the units or modules in the device may be implemented in the form of hardware circuits. The functions of some or all of the units or modules may be achieved by designing the hardware circuits. The above-mentioned hardware circuits may be understood as one or more processors. For example, in an implementation, the above-mentioned hardware circuit is an application-specific integrated circuit (ASIC). The functions of some or all of the above-mentioned units or modules are achieved by designing the logical relationships between the components within the circuit. As another example, in another implementation, the above-mentioned hardware circuit may be implemented by a programmable logic device (PLD). Taking a field programmable gate array (FPGA) as an example, it may include a large number of logic gates. The connection relationships between the logic gates are configured via configuration files, thereby achieving the functions of some or all of the above-mentioned units or modules. All units or modules of the above device may be implemented entirely in the form of calling software by the processor, or entirely by hardware circuits, or partially in the form of calling software by the processor and the rest by hardware circuits.

In the embodiments of the present disclosure, the processor is a circuit with signal processing functions. In an implementation, the processor may be a circuit with instruction reading and running functions, such as a CPU, a microprocessor, a graphics processing unit (GPU) (which may be understood as a microprocessor), or a digital signal processor (DSP). In another implementation, the processor may implement certain functions by means of the logical relationship of hardware circuits. The logical relationship of the above-mentioned hardware circuits is fixed or reconfigurable. For example, the processor is a hardware circuit implemented by an ASIC or a PLD, such as an FPGA. In a reconfigurable hardware circuit, the process of loading, by the processor, a configuration document to implement the hardware circuit configuration may be understood as the process of loading, by the processor, instructions to implement the functions of some or all of the above units or modules. In addition, the processor is may also be a hardware circuit designed for artificial intelligence, which may be understood as ASIC, such as a neural network processing unit (NPU), a tensor processing unit (TPU), a deep learning processing unit (DPU), or the like.

FIG. 7A is a schematic block diagram of a first network element provided according to an embodiment of the present disclosure. As shown in FIG. 7A, the first network element 7100 may include at least one of a transceiver module 7101, a processing module 7102, or the like. In some embodiments, the transceiver module is configured to provide first information to a second network element, where the first information indicates a direction corresponding to a handling based on a PDU set, and the first information is used by the second network element to generate at least one PCC rule for the SDF.

Optionally, the transceiver module is configured to perform at least one of the communication steps such as sending and/or receiving steps (for example, but not limited to, steps S2101 and S2102) performed by the first network element 101 in any of the above methods, which will not be elaborated here. Optionally, the processing module is configured to perform at least one of the other steps (for example, but not limited to, step S2103) performed by the first network element 101 in any of the above methods, which will not be elaborated here.

FIG. 7B is a schematic block diagram of a second network element provided according to an embodiment of the present disclosure. As shown in FIG. 7B, the second network element 7200 may include at least one of a transceiver module 7201, a processing module 7202, or the like. In some embodiments, the transceiver module is configured to receive first information sent by a first network element, where the first information indicates a direction corresponding to a handling based on a PDU set. The processing module is configured to generate at least one PCC rule for the SDF based on the first information.

Optionally, the transceiver module is configured to perform at least one of the communication steps such as sending and/or receiving steps (for example, but not limited to, steps S2101 and S2102) performed by the second network element 102 in any of the above methods, which will not be elaborated here. Optionally, the processing module is configured to perform at least one of the other steps (for example, but not limited to, step S2103) performed by the second network element 102 in any of the above methods, which will not be elaborated here.

In some embodiments, the transceiver module may include a sending module and/or a receiving module, and the sending module and the receiving module may be separate or integrated together. Optionally, the transceiver module may be interchanged with the transceiver.

In some embodiments, the processing module may be a single module or may include multiple sub-modules. Optionally, the sub-modules may each execute all or some of the steps to be performed by the processing module. Optionally, the processing module may be interchanged with the processor.

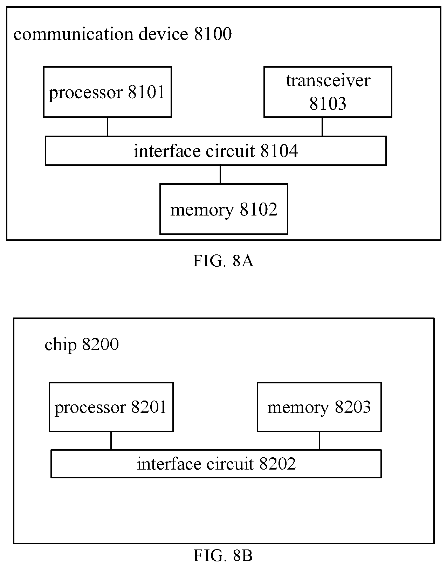

FIG. 8A is a schematic block diagram of a communication device 8100 provided according to an embodiment of the present disclosure. The communication device 8100 may be a network device (such as an access network device, a core network device, or the like), a terminal (such as a user equipment, or the like), a chip, chip system, or processor that supports a network device to implement any one of the above methods, or a chip, chip system, or processor that supports a terminal to implement any one of the above methods. The communication device 8100 may be configured to implement the methods as described in the above-mentioned method embodiments. For details, reference may be made to the description in the above-mentioned method embodiments.

As shown in FIG. 8A, the communication device 8100 includes one or more processors 8101. The processor 8101 may be a general-purpose processor, a special-purpose processor, or the like. The processor 8101 may be, for example, a baseband processor or a central processor. The baseband processor may be configured to process a communication protocol and communication data, and the central processor may be configured to control a communication device (such as a base station, a baseband chip, a terminal, a terminal chip, a distributed unit (DU), a centralized unit (CU), or the like), execute a program, and process data of the program. Optionally, the communication device 8100 is configured to perform any one of the above methods. Optionally, one or more processors 8101 may invoke instructions to cause the communication device 8100 to perform any one of the above methods.

In some embodiments, the communication device 8100 further includes one or more transceivers 8102. When the communication device 8100 includes one or more transceivers 8102, at least one of the communication steps such as sending and/or receiving steps (for example, but not limited to, steps S2101 and S2102) in the above methods is performed by the transceiver 8102, and at least one of the other steps (for example, but not limited to, step S2103) is performed by the processor 8101. In an optional embodiment, the transceiver may include a receiver and/or a transmitter, and the receiver and the transmitter may be separate or integrated. Optionally, terms such as transceiver, transceiver unit, transceiver device, transceiver circuit, interface circuit and interface may be used interchangeably; terms such as transmitter, transmitter unit, transmitter device, and transmitter circuit may be used interchangeably; and terms such as receiver, receiver unit, receiver device, and receiver circuit may be used interchangeably.

In some embodiments, the communication device 8100 further includes one or more memories 8103 for storing data. Optionally, all or some of the memories 8103 may also be located outside the communication device 8100. In an optional embodiment, the communication device 8100 may include one or more interface circuits 8104. Optionally, the interface circuits 8104 are connected to the memory 8102. The interface circuits 8104 may be configured to receive data from the memory 8102 or other devices, and may be configured to send data to the memory 8102 or other devices. For example, the interface circuits 8104 may read data stored in the memory 8102 and send the data to the processor 8101.

The communication device 8100 described in the above embodiments may be a network device or a terminal, but the scope of the communication device 8100 described in the present disclosure is not limited thereto, and the structure of the communication device 8100 may not be limited to FIG. 8A. The communication device 8100 may be an independent device or part of a larger device. For example, the communication device 8100 may be (1) a stand-alone integrated circuit (IC), or a chip, or a chip system or subsystem; (2) a set of one or more ICs, in which optionally, the set of ICs may further include a storage component for storing data and programs; (3) an ASIC, such as a modem; (4) a module that may be embedded in other devices; (5) a receiver, a terminal, an intelligent terminal, a cellular phone, a wireless device, a handheld device, a mobile unit, an in-vehicle device, a network device, a cloud device, an artificial intelligence device, or the like; or (6) others.

FIG. 8B is a schematic block diagram of a chip 8200 provided according to an embodiment of the present disclosure. For the case where the communication device 8100 may be a chip or a chip system, reference may be made to the block diagram of the chip 8200 shown in FIG. 8B, but the present disclosure is not limited thereto.

The chip 8200 includes one or more processors 8201, and the chip 8200 is configured to perform any one of the above methods.

In some embodiments, the chip 8200 further includes one or more interface circuits 8202. Optionally, terms such as interface circuit, interface, and transceiver pin may be used interchangeably. In some embodiments, the chip 8200 further includes one or more memories 8203 for storing data. Optionally, all or some of the memories 8203 may be located outside the chip 8200. Optionally, the interface circuits 8202 may be configured to receive data from the memory 8203 or other devices, and may be configured to send data to the memory 8203 or other devices. For example, the interface circuits 8202 may read data stored in the memory 8203 and send the data to the processor 8201.

In some embodiments, at least one of the communication steps such as sending and/or receiving steps in the above methods is performed by the interface circuits 8202. For example, performing, by the interface circuits 8202, the communication steps such as sending and/or receiving steps (for example, but not limited to, steps S2101 and S2102) in the above methods refers to performing, by the interface circuits 8202, data interaction between the processor 8201, the chip 8200, and the memory 8203 or the transceiver device. In some embodiments, at least one of the other steps (for example, but not limited to, step S2103) is performed by the processor 8201.

The modules and/or devices described in the various embodiments of virtual devices, physical devices, chips, and the like may be combined or separated arbitrarily as needed. Optionally, some or all of the steps may be performed collaboratively by multiple modules and/or devices, without limitations here.

The present disclosure further provides a storage medium, which has stored therein instructions that, when executed on the communication device 8100, cause the communication device 8100 to perform any one of the above methods. Optionally, the above-mentioned storage medium is an electronic storage medium. Optionally, the above-mentioned storage medium is a computer-readable storage medium, but is not limited thereto; and the above-mentioned storage medium may also be a storage medium readable by other devices. Optionally, the above storage medium may be a non-transitory storage medium, but is not limited thereto; and the above-mentioned storage medium may also be a transitory storage medium.

The present disclosure further provides a program product that, when executed by the communication device 8100, causes the communication device 8100 to perform any one of the above methods. Optionally, the above-mentioned program product is a computer program product.

The present disclosure further provides a computer program that, when executed on a computer, causes the computer to perform functions of any one of the above-mentioned method embodiments.

## Claims

1. A communication indication method, performed by a first network element, the method comprising:
sending first information to a second network element, wherein the first information indicates a direction of a service data flow (SDF) corresponding to a Quality of Service (QoS) handling based on a packet data unit (PDU) set, and the first information is used by the second network element to generate at least one policy and charging control (PCC) rule for the SDF.

2. The method according to claim 1, wherein the first information indicates at least one of:
only requesting a downlink PDU set to perform the QoS handling;
only requesting an uplink PDU set to perform the QoS handling;
requesting a downlink PDU set and an uplink PDU set to perform the QoS handling;
requesting a downlink PDU set and an uplink PDU set to perform the QoS handling, and QoS parameters corresponding to the downlink PDU set and the uplink PDU set being identical;
requesting a downlink PDU set and an uplink PDU set to perform the QoS handling, and QoS parameters corresponding to the downlink PDU set and the uplink PDU set being different;
requesting a downlink PDU set and an uplink PDU set to perform the QoS handling, and QoS parameters corresponding to the downlink PDU set and the uplink PDU set being obtained based on a network configuration;
requesting a downlink PDU set and an uplink PDU set to perform the QoS handling, QoS parameters corresponding to the downlink PDU set and the uplink PDU set being different, and QoS parameters corresponding to a downlink PDU and an uplink PDU being identical; or
requesting a downlink PDU set and an uplink PDU set to perform the QoS handling, QoS parameters corresponding to the downlink PDU set and the uplink PDU set being different, and QoS parameters corresponding to a downlink PDU and an uplink PDU being different.

3. The method according to claim 2, wherein the network configuration comprises at least one of:
an operator policy, a configuration, a subscription, a terminal-side support capability, a radio access network (RAN) support capability, a session management function (SMF) support capability, a user plane function (UPF) support capability, a policy control function (PCF) support capability, a terminal-side activation capability, an RAN activation capability, an SMF activation capability, a UPF activation capability, or a PCF activation capability.

4. The method according to any one of claims 1 to 3, further comprising:
sending second information to the second network element, wherein the second information indicates handling requirements for the PDU set in a relevant direction.

5. The method according to claim 4, wherein the second information indicates at least one of:
an uplink direction or a downlink direction of QoS parameters for a PDU set being applied to a QoS flow;
PDU set specific QoS characteristics;
at least one of uplink PDU set specific QoS characteristics or downlink PDU set specific QoS characteristics;
an uplink protocol description or a downlink protocol description; or
information related to an uplink SDF and a downlink SDF.

6. The method according to claim 5, wherein the PDU set specific QoS characteristics comprise at least one of:
a PDU set delay budget;
a PDU set error rate;
PDU set integrated handling information; or
data flow direction information.

7. The method according to claim 5, wherein the uplink PDU set specific QoS characteristics comprise at least one of:
an uplink PDU set delay budget;
an uplink PDU set error rate; or
uplink PDU set integrated handling information.

8. The method according to claim 5, wherein the downlink PDU set specific QoS characteristics comprise at least one of:
a downlink PDU set delay budget;
a downlink PDU set error rate; or
downlink PDU set integrated processing information.

9. The method according to claim 5, wherein the information related to the uplink SDF and the downlink SDF comprises:
a paired identifier (ID) of the uplink SDF and the downlink SDF; and
a percentage or threshold of QoS parameters for an uplink PDU set compared with QoS parameters for a downlink PDU set.

10. The method according to any one of claims 1 to 9, wherein sending the first information and the second information to the second network element comprises any one of:
sending the first information and the second information to the second network element via a network exposure function (AF) session with a QoS request procedure;
sending the first information and the second information to the second network element via an AF session with a QoS request update procedure;
sending the first information and the second information to the second network element via a service specific parameter provisioning;
sending the first information and the second information to the second network element via an AF session policy setting process;
sending the first information and the second information to the second network element via a third network element;
sending the first information and the second information to the second network element via a fourth network element; or
sending the first information and the second information to the second network element via a third network element and a fourth network element.

11. The method according to any one of claims 1 to 10, wherein the first network element is an AF network element, the second network element is a PCF network element, the third network element is a network exposure function (NEF) network element, and the fourth network element is a time sensitive communication and time synchronization function (TSCTSF) network element.

12. A communication indication method, performed by a second network element, the method comprising:
receiving first information sent by a first network element, wherein the first information indicates a direction of a service data flow (SDF) corresponding to a Quality of Service (QoS) handling based on a packet data unit (PDU) set; and
generating at least one policy and charging control (PCC) rule for the SDF based on the first information.

13. The method according to claim 12, wherein the first information indicates at least one of:
only requesting a downlink PDU set to perform the QoS handling;
only requesting an uplink PDU set to perform the QoS handling;
requesting a downlink PDU set and an uplink PDU set to perform the QoS handling;
requesting a downlink PDU set and an uplink PDU set to perform the QoS handling, and QoS parameters corresponding to the downlink PDU set and the uplink PDU set being identical;
requesting a downlink PDU set and an uplink PDU set to perform the QoS handling, and QoS parameters corresponding to the downlink PDU set and the uplink PDU set being different;
requesting a downlink PDU set and an uplink PDU set to perform the QoS handling, and QoS parameters corresponding to the downlink PDU set and the uplink PDU set being obtained based on a network configuration;
requesting a downlink PDU set and an uplink PDU set to perform the QoS handling, QoS parameters corresponding to the downlink PDU set and the uplink PDU set being different, and QoS parameters corresponding to a downlink PDU and an uplink PDU being identical; or
requesting a downlink PDU set and an uplink PDU set to perform the QoS handling, QoS parameters corresponding to the downlink PDU set and the uplink PDU set being different, and QoS parameters corresponding to a downlink PDU and an uplink PDU being different.

14. The method according to claim 13, wherein the network configuration comprises at least one of:
an operator policy, a configuration, a subscription, a terminal-side support capability, a radio access network (RAN) support capability, a session management function (SMF) support capability, a user plane function (UPF) support capability, a policy control function (PCF) support capability, a terminal-side activation capability, an RAN activation capability, an SMF activation capability, a UPF activation capability, or a PCF activation capability.

15. The method according to any one of claims 12 to 14, further comprising:
receiving second information sent by the first network element, wherein the second information indicates handling requirements for the PDU set in a relevant direction.

16. The method according to claim 15, wherein the second information indicates at least one of:
an uplink direction or a downlink direction of QoS parameters for a PDU set being applied to a QoS flow;
PDU set specific QoS characteristics;
at least one of uplink PDU set specific QoS characteristics or downlink PDU set specific QoS characteristics;
an uplink protocol description or a downlink protocol description; or
information related to an uplink SDF and a downlink SDF.

17. The method according to claim 16, wherein the PDU set specific QoS characteristics comprise at least one of:
a PDU set delay budget;
a PDU set error rate;
PDU set integrated handling information; or
data flow direction information.

18. The method according to claim 16, wherein the uplink PDU set specific QoS characteristics comprise at least one of:
an uplink PDU set delay budget;
an uplink PDU set error rate; or
uplink PDU set integrated handling information.

19. The method according to claim 16, wherein the downlink PDU set specific QoS characteristics comprise at least one of:
a downlink PDU set delay budget;
a downlink PDU set error rate; or
downlink PDU set integrated handling information.

20. The method according to claim 16, wherein the information related to the uplink SDF and the downlink SDF comprises:
a paired identifier (ID) of the uplink SDF and the downlink SDF; and
a percentage or threshold of QoS parameters for an uplink PDU set compared with QoS parameters for a downlink PDU set.

21. The method according to any one of claims 12 to 20, wherein the PCC rule comprises PDU set specific QoS characteristics.

22. The method according to claim 20, wherein
in a case where data flow direction information indicates that a flow direction is an uplink, the PCC rule is applied to an uplink QoS flow in the SDF;
in a case where data flow direction information indicates that a flow direction is a downlink, the PCC rule is applied to a downlink QoS flow in the SDF;
in a case where data flow direction information indicates that a flow direction is a downlink and an uplink, the PCC rule is applied to an uplink QoS flow and a downlink QoS flow in the SDF.

23. The method according to any one of claims 12 to 20, wherein the PCC rule comprises at least one of:
uplink PDU set specific QoS characteristics; or
downlink PDU set specific QoS characteristics.

24. The method according to claim 23, wherein the uplink PDU set specific QoS characteristics are applied to an uplink QoS flow in the SDF, and the downlink PDU set specific QoS characteristics are applied to a downlink QoS flow in the SDF.

25. The method according to any one of claims 12 to 24, wherein sending the first information and the second information to the second network element comprises:
sending the first information and the second information to the second network element via a network exposure function (AF) session with a QoS request procedure;
sending the first information and the second information to the second network element via an AF session with a QoS request update procedure;
sending the first information and the second information to the second network element via a service specific parameter provisioning;
sending the first information and the second information to the second network element via an AF session policy setting process;
sending the first information and the second information to the second network element via a third network element;
sending the first information and the second information to the second network element via a fourth network element; or
sending the first information and the second information to the second network element via a third network element and a fourth network element.

26. The method according to any one of claims 12 to 25, wherein the first network element is an AF network element, the second network element is a PCF network element, the third network element is a network exposure function (NEF) network element, and the fourth network element is a time sensitive communication and time synchronization function (TSCTSF) network element.

27. A communication processing method, comprising:
sending, by a first network element, first information to a second network element, wherein the first information indicates a direction of a service data flow (SDF) corresponding to a Quality of Service (QoS) handling based on a packet data unit (PDU) set; and
generating, by the second network element, at least one policy and charging control (PCC) rule for the SDF based on the first information.

28. A first network element, comprising:
a transceiver module configured to send first information to a second network element, wherein the first information indicates a direction of a service data flow (SDF) corresponding to a Quality of Service (QoS) handling based on a packet data unit (PDU) set, and the first information is used by the second network element to generate at least one policy and charging control (PCC) rule for the SDF.

29. A second network element, comprising:
a transceiver module configured to receive first information sent by a first network element, wherein the first information indicates a direction of a service data flow (SDF) corresponding to a Quality of Service (QoS) handling based on a packet data unit (PDU) set; and
a processing module configured to generate at least one policy and charging control (PCC) rule for the SDF based on the first information.

30. A core network device, comprising:
a transceiver module configured to send first information to a second network element, wherein the first information indicates a direction of a service data flow (SDF) corresponding to a Quality of Service (QoS) handling based on a packet data unit (PDU) set; or to receive first information sent by a first network element; and
a processing module configured to generate at least one policy and charging control (PCC) rule for the SDF based on the first information.

31. A first network element, comprising:
one or more processors,
wherein the second network element is configured to perform the communication processing method according to any one of claims 1 to 11.

32. A second network element, comprising:
one or more processors,
wherein the second network element is configured to perform the communication processing method according to any one of claims 12 to 26.

33. A core network device, comprising:
one or more processors,
wherein the core network device is configured to perform the communication processing method according to claim 27.

34. A communication system, comprising:
a first network element configured to perform the communication processing method according to any one of claims 1 to 11; and
a second network element configured to perform the communication processing method according to any one of claims 12 to 26.

35. A storage medium having stored therein instructions that, when run on a communication device, cause the communication device to perform the communication processing method according to any one of claims 1 to 11 or any one of claims 12 to 26.
